# EUROPEAN PATENT APPLICATION

(11) **EP 4 383 798 A1**
(43) Date of publication of application: **12.06.2024**
(21) Application number: 21952821.3
(22) Date of filing: 05.08.2021
(51) Int. Cl.: H04W 24/10

(54) **TERMINAL, WIRELESS COMMUNICATION METHOD, AND BASE STATION**

(71) Applicant: NTT DOCOMO, INC., Tokyo 100-6150 (JP)
(72) Inventor: ECHIGO, Haruhi, Tokyo 100-6150 (JP); HARADA, Hiroki, Tokyo 100-6150 (JP); MATSUMURA, Yuki, Tokyo 100-6150 (JP); SHIBAIKE, Naoya, Tokyo 100-6150 (JP); NAGATA, Satoshi, Tokyo 100-6150 (JP)
(74) Representative: Hoffmann Eitle
(86) International application number: PCT/JP2021/029217
(87) International publication number: WO 2023/012997

(57) **Abstract**

A terminal according to one aspect of the present disclosure includes: a receiving section that computes one or more radio link qualities corresponding to one or more reference signals; and a control section that controls transmission of a channel state information (CSI) report, based on the one or more radio link qualities. According to one aspect of the present disclosure, preferable channel estimation / resource use is enabled.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication technologies, it is studied to utilize the artificial intelligence (AI) technology, such as machine learning (ML), for control, management, and the like of networks/devices. For example, AI-aided beam management using AI-aided estimation is studied.

However, study about concrete contents of the AI-aided beam management has not been advanced yet. Unless these are appropriately defined, highly accurate channel estimation / highly efficient resource use cannot be achieved, which may suppress improvement of communication throughput or communication quality.

Thus, an object of the present disclosure is to provide a terminal, a radio communication method, and a base station that enable preferable channel estimation / resource use.

### Solution to Problem

A terminal according to one aspect of the present disclosure includes: a receiving section that computes one or more radio link qualities corresponding to one or more reference signals; and a control section that controls transmission of a channel state information (CSI) report, based on the one or more radio link qualities.

### Advantageous Effects of Invention

According to one aspect of the present disclosure, preferable channel estimation / resource use is enabled.

### Brief Description of Drawings

[FIG. 1] FIG. 1 is a diagram to show an example of enhanced beam reporting with prediction.
[FIG. 2] FIG. 2 is a diagram to show an example of enhanced beam reporting for AI-aided beam management.
[FIG. 3] FIGS. 3A to 3C are diagrams to show an example of existing CSI related quantities and new CSI related quantities according to a first embodiment.
[FIG. 4] FIG. 4 is a diagram to show another example of the existing CSI related quantities and new CSI related quantities according to the first embodiment.
[FIG. 5] FIGS. 5A to 5E are diagrams to show an example of phase information according to the first embodiment.
[FIG. 6] FIGS. 6A and 6B are diagrams to show an example of evaluation of radio link qualities according to a second embodiment.
[FIG. 7] FIG. 7 is a diagram to show another example of the evaluation of radio link qualities according to the second embodiment.
[FIG. 8] FIG. 8 is a diagram to show an example of RSs used for computation of CSI related quantities according to the second embodiment.
[FIG. 9] FIG. 9 is a diagram to show an example of conditional beam reporting using a PUCCH according to a third embodiment.
[FIG. 10] FIG. 10 is a diagram to show an example of a beam report MAC CE according to the third embodiment.
[FIG. 11] FIG. 11 is a diagram to show an example of the beam report MAC CE according to the third embodiment.
[FIG. 12] FIG. 12 is a diagram to show an example of the beam report MAC CE according to the third embodiment.
[FIG. 13] FIG. 13 is a diagram to show an example of RSs used for computation of CSI related quantities according to the third embodiment.
[FIG. 14] FIGS. 14A and 14B are each a diagram to show an example of control of presence/absence of a trigger of beam reporting according to the third embodiment.
[FIG. 15] FIGS. 15A and 15B are each a diagram to show an example of selection of an RS to be reported according to a fourth embodiment.
[FIG. 16] FIG. 16 is a diagram to show an example of RRC parameters indicating selection policy according to the fourth embodiment.
[FIG. 17] FIGS. 17A and 17B are diagrams to show examples of a range(s) and the number of bits of an L1-RSRP according to a fifth embodiment.
[FIG. 18] FIG. 18 is a diagram to show an example of predicted beam report related control according to a seventh embodiment.
[FIG. 19] FIGS. 19A and 19B are each a diagram to show an example of information of a quantized predicted CSI time.
[FIG. 20] FIGS. 20A and 20B are each a diagram to show an example of a time duration available for prediction.
[FIG. 21] FIG. 21 is a diagram to show an example of computation of prediction accuracy according to the seventh embodiment.
[FIG. 22] FIG. 22 is a diagram to show an example of the computation of prediction accuracy according to the seventh embodiment.
[FIG. 23] FIG. 23 is a diagram to show an example of computation of future prediction accuracy information according to the seventh embodiment.
[FIG. 24] FIG. 24 is a diagram to show an example of a schematic structure of a radio communication system according to one embodiment.
[FIG. 25] FIG. 25 is a diagram to show an example of a structure of a base station according to one embodiment.
[FIG. 26] FIG. 26 is a diagram to show an example of a structure of a user terminal according to one embodiment.
[FIG. 27] FIG. 27 is a diagram to show an example of a hardware structure of the base station and the user terminal according to one embodiment.

### Description of Embodiments

### (Application of Artificial Intelligence (AI) technology to Radio Communication)

For future radio communication technologies, it is studied to utilize the AI technology for control, management, and the like of networks/devices.

For example, for future radio communication technologies, it is desired, in particular, to improve accuracy of channel estimation (which may be referred to as channel measurement) for beam management, decoding of a reception signal, and the like in communication using beams.

The channel estimation may be performed by using at least one of a channel state information reference signal (CSI-RS), a synchronization signal (SS), a synchronization signal / broadcast channel (Synchronization Signal / Physical Broadcast Channel (SS/PBCH)) block, a demodulation reference signal (DMRS), a reference signal for measurement (Sounding Reference Signal (SRS)), and the like, for example.

In the previous radio communication technologies, in order to perform highly accurate channel estimation, it is necessary to ensure a large number of resources for estimation (for example, resources for transmitting reference signals) and to perform channel estimation for all the antenna ports to be used. When resources for DMRSs, CSI-RSs, and the like are increased to enable highly accurate channel estimation, resources for data transmission/reception (for example, downlink shared channel (Physical Downlink Shared Channel (PDSCH)) resources, uplink shared channel (Physical Uplink Shared Channel (PUSCH)) resources) result in decreasing.

In the previous radio communication technologies, control based on a current or past measurement result is possible. However, in a case where radio quality deteriorates to disconnect a link, for example, delays are caused in responding to such a situation.

It is studied to enable highly accurate channel estimation using fewer resources and measurement for future prediction, by using the AI technology such as machine learning (ML). Such channel estimation may be referred to as AI-aided estimation. Beam management using the AI-aided estimation may be referred to as AI-aided beam management.

As an example of the AI-aided beam management, when AI is used in a terminal (also referred to as a user terminal, User Equipment (UE), and the like), the AI may predict future beam measurement values. The UE may trigger enhanced beam failure recovery (enhanced BFR) with prediction.

As an example of the AI-aided beam management, when AI is used in a base station (BS), the AI may predict future beam measurement values (for example, a measured value of a narrow beam), or may estimate (derive) a measured value of a narrow beam, based on management of a small number of beams. The UE may receive a beam indication with a time offset.

However, study about concrete contents of the AI-aided beam management has not been advanced yet. Unless these are appropriately defined, highly accurate channel estimation / highly efficient resource use cannot be achieved, which may suppress improvement of communication throughput or communication quality.

Hence, the inventors of the present invention came up with the idea of a beam report preferable to AI-aided beam management. Note that, each of the embodiments of the present disclosure may be applied when AI/prediction is not used.

In an embodiment of the present disclosure, a UE/BS performs training of an ML model in a training mode and performs the ML model in a test mode (also referred to as a testing mode and the like). In the test mode, validation of the accuracy of the ML model trained in the training mode (trained ML model) may be performed.

In the present disclosure, the UE/BS may input channel state information, a reference signal measurement value, and the like to the ML model and output highly accurate channel state information / measured value / beam selection/position, future channel state information / radio link quality, and the like.

Note that, in the present disclosure, AI may be interpreted as an object (also referred to as a target, data, function, program, and the like) having (implementing) at least one of the following features:
- estimation based on observed or collected information,
- selection based on observed or collected information, and
- prediction based on observed or collected information.

In the present disclosure, the object may be, for example, an apparatus, a device, or the like, such as a terminal or a base station. The object may correspond to a program included in the apparatus.

Note that, in the present disclosure, the ML model may be interpreted as an object having (implementing) at least one of the following features:
- feeding information to thereby generate an estimated value,
- feeding information to thereby predict an estimated value,
- feeding information to thereby find a feature, and
- feeding information to thereby select an operation.

In the present disclosure, the ML model may be interpreted as at least one of an AI model, predictive analytics, a predictive analytics model, and the like. The ML model may be derived by using at least one of regression analysis (for example, linear regression analysis, multiple regression analysis, logistic regression analysis), support vector machine, random forest, neural network, deep learning, and the like. In the present disclosure, a model may be interpreted as at least one of an encoder, a decoder, a tool, and the like.

The ML model outputs at least one piece of information among an estimated value, a predicted value, a selected operation, classification, and the like, based on the input information.

Examples of the ML model may include supervised learning, unsupervised learning, and reinforcement learning. The supervised learning may be used to perform learning of a general rule for mapping an input to an output. The unsupervised learning may be used to perform learning of characteristics of data. The reinforcement learning may be used to perform learning of operation for maximizing a goal.

In each of the embodiments to be described below, description will be given mainly by assuming a case of using supervised learning for an ML model, but this is not restrictive.

In the present disclosure, "perform," "manage," "operate," "carry out," and the like may be interchangeably interpreted. In the present disclosure, test, after-training, substantial use, actual use, and the like may be interchangeably interpreted. A signal may be interpreted as a signal/channel and vice versa.

In the present disclosure, the training mode may correspond to a mode in which a UE/BS transmits/receives a signal for an ML model (in other words, an operation mode in a training period). In the present disclosure, the test mode may correspond to a mode in which a UE/BS performs an ML model (for example, performs a trained ML model to predict an output) (in other words, an operation mode in a test period).

In the present disclosure, the training mode may mean a mode in which, as a specific signal to be transmitted in the test mode, the specific signal with high overhead (for example, a large resource amount) is transmitted.

In the present disclosure, the training mode may mean a mode in which a first configuration (for example, a first DMRS configuration, a first CSI-RS configuration) is referred to. In the present disclosure, the test mode may mean a mode in which a second configuration (for example, a second DMRS configuration, a second CSI-RS configuration), which is different from the first configuration, is referred to. In the first configuration, a larger number of at least one of time resources, frequency resources, coding resources, ports (antenna ports) related to measurement than those in the second configuration may be configured.

Embodiments according to the present disclosure will be described in detail with reference to the drawings as follows. The radio communication methods according to respective embodiments may each be employed individually, or may be employed in combination.

In the following embodiments, description will be given of an ML model related to UE-BS communication, and hence related subjects are a UE and a BS. However, application of each of the embodiments of the present disclosure is not limited to this. For example, for communication between different subjects (for example, UE-UE communication), the UE and the BS in the following embodiments may be interpreted as a first UE and a second UE. In other words, the UE, the BS, and the like in the present disclosure may be interpreted as any UE/BS.

In the present disclosure, "A/B" and "at least one of A and B" may be interchangeably interpreted.

In the present disclosure, "activate," "deactivate," "indicate," "select," "configure," "update," "determine," and the like may be interchangeably interpreted. In the present disclosure, "support," "control," "controllable," "operate," and "operable" may be interchangeably interpreted.

In the present disclosure, radio resource control (RRC), an RRC parameter, an RRC message, a higher layer parameter, an information element (IE), and a configuration may be interchangeably interpreted. In the present disclosure, a Medium Access Control control element (MAC Control Element (CE)), an update command, and an activation/deactivation command may be interchangeably interpreted.

In the present disclosure, a panel, a UE panel, a panel group, a beam, a beam group, a precoder, an Uplink (UL) transmission entity, a TRP, spatial relation information (SRI), a spatial relation, an SRS resource indicator (SRI), an SRS resource, a control resource set (CORESET), a Physical Downlink Shared Channel (PDSCH), a codeword, a base station, a given antenna port (for example, a demodulation reference signal (DMRS) port), a given antenna port group (for example, a DMRS port group), a given group (for example, a code division multiplexing (CDM) group, a given reference signal group, a CORESET group), a given resource (for example, a given reference signal resource), a given resource set (for example, a given reference signal resource set), a CORESET pool, a PUCCH group (PUCCH resource group), a spatial relation group, a downlink TCI state (DL TCI state), an uplink TCI state (UL TCI state), a unified TCI state, a common TCI state, QCL, QCL assumption, and the like may be interchangeably interpreted.

In the present disclosure, an index, an ID, an indicator, and a resource ID may be interchangeably interpreted. In the present disclosure, a sequence, a list, a set, a group, a cluster, a subset, and the like may be interchangeably interpreted.

In the present disclosure, beam reporting may be interpreted as beam measurement reporting, CSI reporting, CSI measurement reporting, predicted beam reporting, predicted CSI reporting, beam reporting with a time offset, and the like, and vice versa.

In the present disclosure, a CSI-RS may be interpreted as at least one of a non-zero power (Non Zero Power (NZP)) CSI-RS, a zero power (ZP) CSI-RS, and CSI interference measurement (CSI-IM), and vice versa.

In the present disclosure, a measured/reported RS may mean an RS measured/reported for beam reporting.

### (Radio Communication Method)

In the following embodiments, a UE may report predicted beam measurement CSI (which may be referred to as an enhanced beam report with prediction) to a network. The UE may report enhanced beam measurement CSI for AI-aided beam management (which may be referred to as an enhanced beam report for AI-aided beam management) to the network. In the following, an enhanced beam report and a beam report may be interchangeably interpreted.

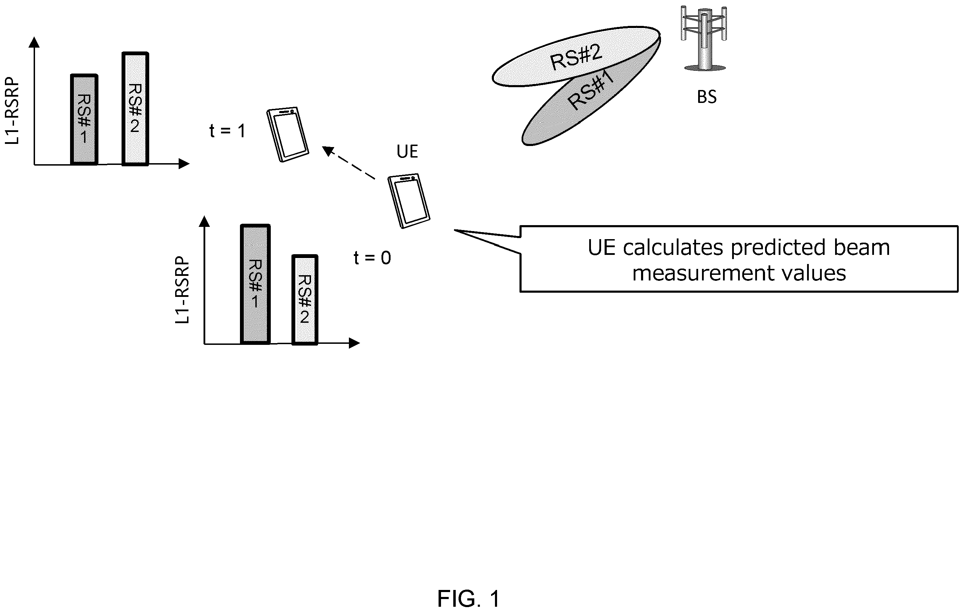

FIG. 1 is a diagram to show an example of enhanced beam reporting with prediction. In the example, a BS transmits two RSs (RSs #1 and #2), and the UE with AI predicts beam quality at a future time point t = 1, based on beam measurement (L1-RSRP measurement) at a time point t = 0. Note that the RSs may be CSI-RSs, SSBs, or the like, for example.

The UE reports predicted beam measurement values. Note that the UE may report current (actual, at t = 0) beam measurement values together with the predicted (at t = 1) beam measurement values.

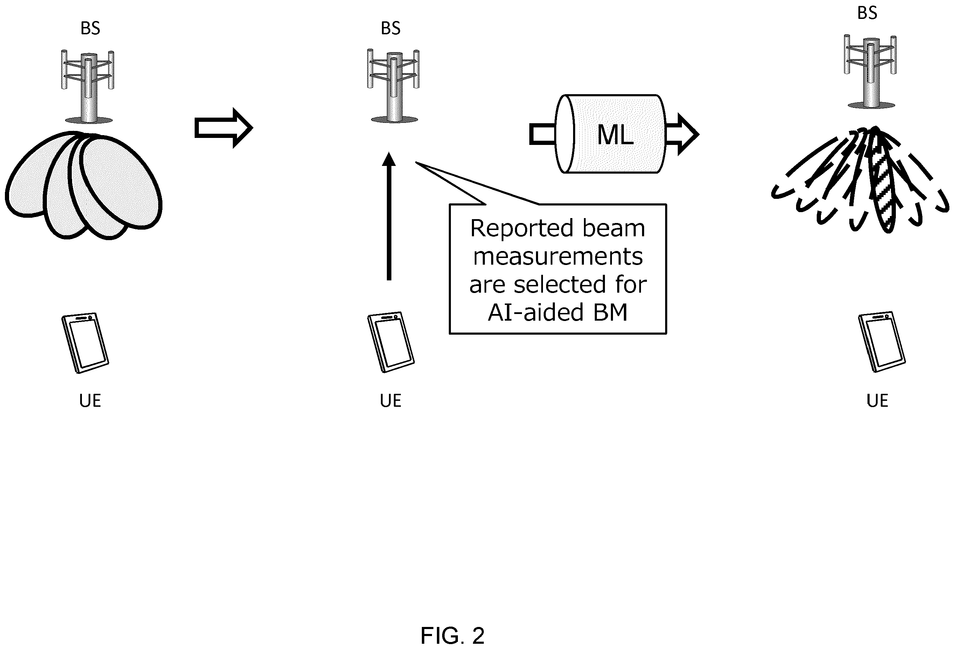

FIG. 2 is a diagram to show an example of enhanced beam reporting for AI-aided beam management. In the example, the BS transmits RSs by using four relatively wide beams. The UE selects beam measurements to report for highly accurate AI-based beam estimation (in other words, preferable for such estimation). The UE may transmit a beam measurement report (UE may trigger beam measurement reporting) only when necessary.

The UE may include not only L1-RSRPs/SINRs but also information preferable for AI-aided beam management, in a beam measurement result report.

A BS with AI may estimate/predict a beam optimal for the UE, based on the received beam measurement result report (relatively small number of beam measurement results).

Note that, in the present disclosure, timing, a time point, a time, a slot, a sub-slot, a symbol, a subframe, and the like may be interchangeably interpreted.

The following embodiments relate to the contents, processing, transmission timing, and the like of these beam reports.

### <First Embodiment>

A first embodiment relates to a CSI related quantity.

In the first embodiment, the UE may include, in a beam report, a CSI related quantity (also referred to as a new CSI related quantity below for simplicity) different from a CSI related quantity supported in existing specifications of Rel-15/16 NR (also referred to as an existing CSI related quantity below for simplicity), for report.

The existing CSI related quantity may include at least one of a channel quality indicator (CQI), a precoding matrix indicator (PMI), a CSI-RS resource indicator (CRI), an SS/PBCH block resource indicator (SS/PBCH Block Indicator (SSBRI)), a layer indicator (LI), a rank indicator (RI), Layer 1 (L1)-Reference Signal Received Power (RSRP) (reference signal received power in layer 1), L1-Signal to Interference plus Noise Ratio (SINR), and the like, for example.

The new CSI related quantity may be interpreted as a CSI related quantity for AI-aided beam management, enhanced CSI related quantity, and the like, and vice versa.

Note that, in the present disclosure, description will be given below by assuming (interpreting) an existing CSI related quantity as an L1-RSRP/SINR unless otherwise specifically noted. In other words, an L1-RSRP may be interpreted as an L1-SINR, an existing CSI related quantity, and the like, and vice versa.

The UE may report a new CSI related quantity together with an existing CSI related quantity or may report the quantities separately (for example, by using different time/frequency resources).

Whether to transmit the new CSI related quantity may be determined based on a specific rule, may be configured for the UE by using physical layer signaling (for example, downlink control information (DCI)), higher layer signaling (for example, RRC signaling, a MAC CE), or a specific signal/channel, or a combination of these, or may be determined based on UE capability. For example, the UE may be configured with a measurement report of the existing/new CSI related quantity by an RRC parameter for configuring a CSI related quantity to report (for example, reportQuantity).

### {New CSI Related Quantity}

The new CSI related quantity may include phase/amplitude information of a measured RS. The UE may report a phase/amplitude calculated at a given time point or may report a calculated phase/amplitude of the newest RS. Note that the phase/amplitude information may indicate a complex value indicating a phase and an amplitude.

The new CSI related quantity may include information of a time to measure an RS (time to measure RS) for CSI computation. This time may correspond to a time/timing at which the UE refers to the RS for CSI calculation or may indicate the time difference from the transmission timing of a beam report, for example. This information may indicate the RS resource of the RS to measure, instead of the time / together with the time.

The new CSI related quantity may include spatial information (which may be referred to as space-related information) of the measured RS.

The spatial information may include spatial relation information, a TCI state, and the like, or may include information not corresponding to these.

The spatial information may include at least one of the following:
- information related to the angle of arrival (AoA) of the measured RS,
- information related to a spatial correlation of the measured RS,
- information related to a UE panel used for reception of the measured RS, and
- information indicating whether RSs can be received simultaneously.

The information related to the AoA may include at least one of the degree of the AoA, the radian of the AoA, the angular spread of the AoA, and the like of the measured RS. The angle of arrival may be referred to as the angle of reception.

The information related to a spatial correlation may include information related to the spatial correlation between the measured RS and another RS or may include, when there are a plurality of measured RSs, information related to the spatial correlation between the measured RSs.

The information related to spatial correlation may be reported when there is a difference in a beam for which the UE measures an existing CSI related quantity (for example, an L1-RSRP) to report between RSs to report (or measured RSs), for example.

The information related to a spatial relation correlation may indicate the spatial correlation of a reported RS, for an RS having the highest L1-RSRP.

The information related to a spatial correlation may indicate a binary value representing correlated/uncorrelated, may indicate a value representing a correlation (or the degree of correlation), may be information related to QCL / TCI state / spatial relation, may be information indicating an influence of fading, may be information indicating the variance (or standard deviation) of AoA or information indicating the reciprocal of the variance / standard deviation, or may include a plurality of these information.

The UE may determine the number of beam measurements to report per beam, based on a specific rule, may determine the number, based on physical layer signaling (for example, DCI), higher layer signaling (for example, RRC signaling, a MAC CE), or a specific signal/channel, or a combination of these, or may determine the number, based on UE capability.

The information related to a UE panel may include a panel ID, for example. The information related to a UE panel may be reported when there is a difference in a panel for which the UE measures an existing CSI related quantity (for example, an L1-RSRP) to report between RSs to report (measured RSs), for example.

The UE may determine the number of beam measurements to report per panel, based on a specific rule, may determine the number, based on physical layer signaling (for example, DCI), higher layer signaling (for example, RRC signaling, a MAC CE), or a specific signal/channel, or a combination of these, or may determine the number, based on UE capability.

The information indicating whether RSs can be received simultaneously may be information indicating a beam pair which can (or cannot) be received simultaneously, for example, and may include a plurality of RS indices (or RS configuration indices). The information indicating whether RSs can be received simultaneously may include information related to whether a measured RS and another RS can be received simultaneously or may include information related to whether a plurality of measured RSs can be received simultaneously.

The new CSI related quantity may include location information of the UE. The location information of the UE may include at least one of information (for example, the latitude, longitude, or altitude) obtained by using a positioning system such as the Global Positioning System (GPS), information of a (serving) base station adjacent to the UE (for example, an identifier (ID) of the base station / cell, the distance between the BS and the UE, the direction of the UE when viewed from the BS, the coordinate of the UE or the BS when viewed from the BS of the UE (for example, the X/Y/Z-axis coordinate) or the like), a specific address (for example, the Internet Protocol (IP) address) of the UE, and the like. The location information of the UE is not limited to information with reference to the position of the BS and may be information with reference to a specific point.

The position information of the UE may include information related to the implementation of the UE itself (for example, the location (position) / direction of an antenna, the location/direction of an antenna panel, the number of antennas, the number of antenna panels, or the like).

The new CSI related quantity may include mobility information.

The mobility information may include information indicating at least one of the information indicating a mobility type, the location information of the UE, the moving speed of the UE, the acceleration of the UE, the moving direction of the UE, and the like.

Here, the mobility type may correspond to at least one of fixed location UE, movable/moving UE, no mobility UE, low mobility UE, middle mobility UE, high mobility UE, cell-edge UE, not-cell-edge UE, and the like.

The UE may judge the location information / mobility information, based on at least one of an RS measurement result and a location information / moving speed / acceleration acquisition result.

Note that, in the present disclosure, the location information / mobility information may be acquired by the UE / base station, based on a satellite positioning system (for example, the Global Navigation Satellite System (GNSS), the Global Positioning System (GPS), or the like), may be acquired/ modified based on UE-UE communication / UE-base station communication (for example, may be judged based on Doppler shift (or parameter related to QCL) of a reference signal transmitted from the base station and the like).

The UE may determine the granularity of the location information / mobility information, based on a specific rule, may determine the granularity, based on physical layer signaling (for example, DCI), higher layer signaling (for example, RRC signaling, a MAC CE), or a specific signal/channel, or a combination of these, or may determine the granularity, based on UE capability.

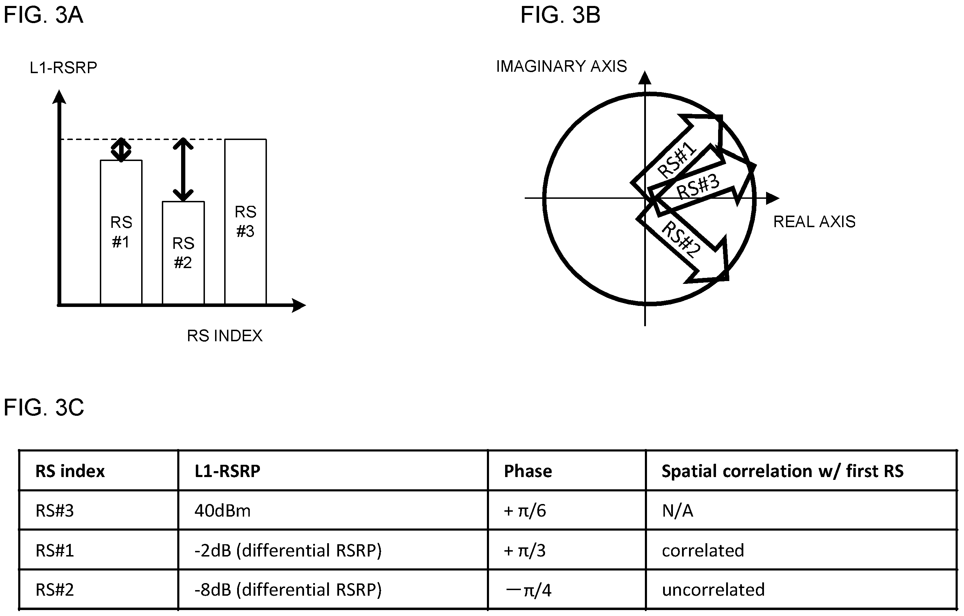

FIGS. 3A to 3C are diagrams to show an example of existing CSI related quantities and new CSI related quantities according to the first embodiment. In this example, the UE measures RSs #1 to #3. FIG. 3A shows measured L1-RSRP values of RSs #1 to #3, and FIG. 3B shows phases (angles in the positive direction of the real axis on a complex plane). Note that, in FIG. 3B, all the amplitudes are normalized to the radius of a unit circle for simplicity.

FIG. 3C shows an example of a beam report about RSs #1 to #3 corresponding to FIGS. 3A and 3B. In FIG. 3A, since L1-RSRPs of RSs #3, #1, and #2 are high in this order, the existing CSI related quantities / new CSI related quantities of the respective RSs may also be included in this order in this beam report.

Note that, in the present disclosure, the RS indices may be CRIs, SSBRIs, or the like. In the following, in the present disclosure, a CSI related quantity may be interpreted as an existing CSI related quantity / new CSI related quantity, and vice versa.

In FIG. 3C, the L1-RSRPs are shown in the form of an absolute value (40 dBm) for RS #3 having the highest L1-RSRP and a difference value (differential RSRP) with respect to the value of RS #3 for each of the other RSs.

In FIG. 3C, values corresponding to FIG. 3B are shown as Phase.

In FIG. 3C, information of a spatial correlation with a first RS (here, RS #3) is shown as spatial information. For example, it is shown to be correlated for RS #1 while being uncorrelated for RS #2. Not that, in the present disclosure, "N/A" may be interpreted as "Not applied," "Not Applicable," "Not Available," "not valid," and the like, and vice versa.

The new CSI related quantity may include a block error rate (BLER) related to the measured RS (for example, a BLEER corresponding to hypothetical PDCCH transmission).

### {Value of New CSI Related Quantity}

The UE may report the value of the new CSI related quantity about a given RS, based on an absolute value or based on a relative value (or a difference value). A CSI related quantity included in a beam report may be a bit sequence representing an absolute value / difference value or may be an index associated with the absolute value / difference value.

The UE may report the value of the new CSI related quantity about the given RS included in the beam report, based on the difference value with respect to the value of the new CSI related quantity about a first RS. Here, the first RS may be an RS corresponding to the first entry (or field) included in the beam report, may be an RS having the lowest or highest corresponding index (for example, resource index, configuration index, or the like) among the RS(s) reported in the beam report, or may be an RS corresponding to the smallest or largest value among the existing CSI related quantities (for example, the L1-RSRPs) reported in the beam report.

The UE may report the value of the new CSI related quantity about the given RS included in the beam report, based on the difference value with respect to the value of a new CSI related quantity reported previously about the given RS. This "given RS" may be "each RS." In this case, it may be assumed that information of a new CSI related quantity expressed by an absolute value about any RS is not included in the beam report. Note that, in the present disclosure, "reported previously" may mean "reported most recently" or may mean "reported j times before (j is an integer)." Note that, in the present disclosure, the UE may perform reporting about another reported information/parameter such as an existing CSI related quantity, based on the difference value with respect to this information/parameter reported previously.

The value of the new CSI related quantity may have different bit widths (sizes) for a case of being reported based on an absolute value and a case of being reported based on a difference value.

The new CSI related quantity may be reported according to the granularity (which may be referred to as the smallest unit of reporting, step size, and the like) different for each RS. The UE may determine the granularity of the new CSI related quantity, based on a specific rule, may determine the granularity, based on physical layer signaling (for example, DCI), higher layer signaling (for example, RRC signaling, a MAC CE), or a specific signal/channel, or a combination of these, or may determine the granularity, based on UE capability.

The UE may determine the granularity of the new CSI related quantity according to the absolute value / difference value of the new CSI related quantity or may determine the granularity according to the position/order of the new CSI related quantity in the beam report.

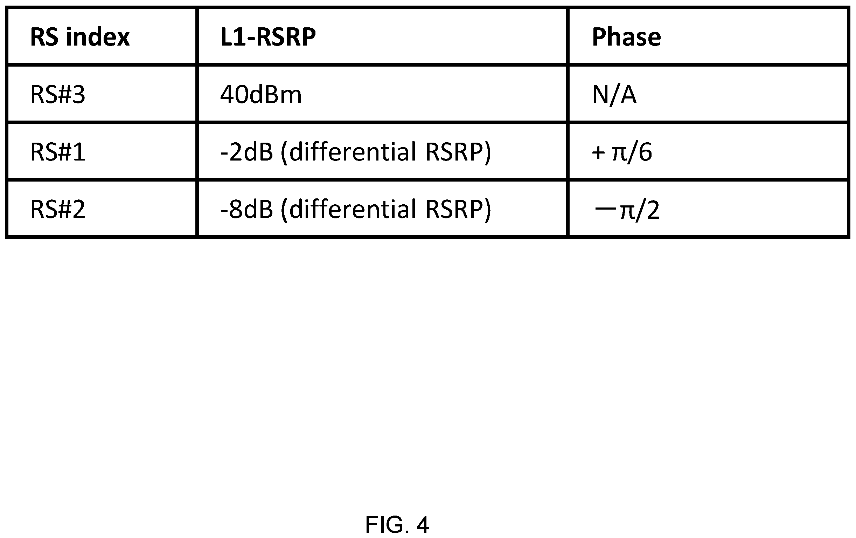

FIG. 4 is a diagram to show another example of existing CSI related quantities and new CSI related quantities according to the first embodiment. This example also shows an example of a beam report about RSs #1 to #3 corresponding to FIGS. 3A and 3B.

The phase of each RS is reported based on an absolute value in FIG. 3C but is reported based on a difference with respect to a phase of the first RS (RS #3) in FIG. 4. Here, it is assumed that the granularity of the phase is n/6. In FIG. 4, it is expressed that the phase of RS #1 is π/3 - n/6 = +n/6 and the phase of RS #2 is -n/4 - π/6 = -5π/12 ≈ -π/2 (rounded based on granularity).

Note that the phase information may be expressed by a bit sequence sequentially associating constellation points in the binary number. For example, when the phase information is expressed in X bits, N in the decimal number may be assigned to N * 2π/2^{x}.

Note that the phase information may be expressed in gray code so that the Hamming distance between adjacent constellation points would be the smallest. In a case of using gray code, an influence of an error when a bit error occurs can be preferably suppressed.

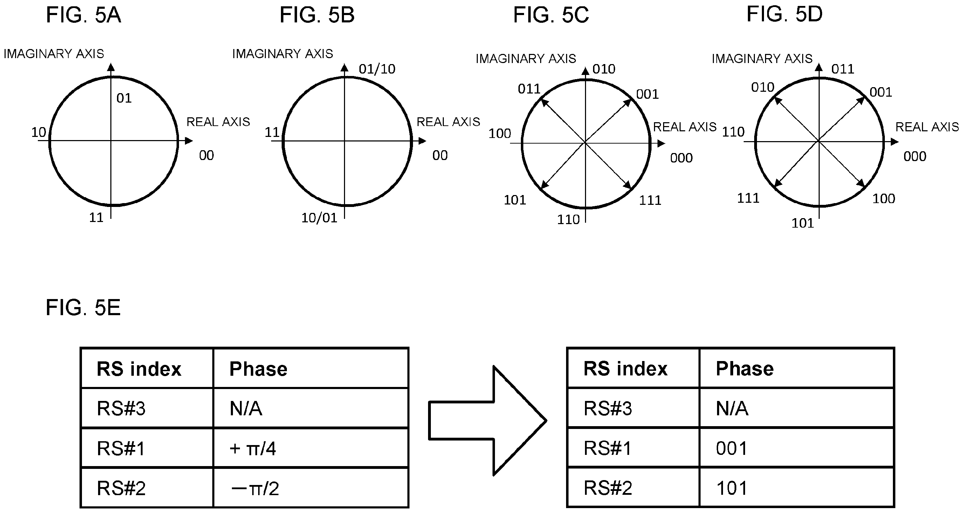

FIGS. 5A to 5E are diagrams to show an example of phase information according to the first embodiment. FIG. 5A shows an example associating a two-bit binary number with each constellation point (phase = N * 2π/2^{x}, X = 2). FIG. 5B shows an example obtained by gray-coding FIG. 5A.

FIG. 5C shows an example associating a three-bit binary number with each constellation point (phase = N * 2π/2^{x}, X = 3). FIG. 5D shows an example obtained by gray-coding FIG. 5C.

When the phase information shown in the left table in FIG. 5E is reported by using the bit representation in FIG. 5D, the bits shown in the right table in FIG. 5E may be used.

According to the first embodiment described above, the UE can appropriately report a CSI related quantity useful for beam management using AI, for example.

### <Second Embodiment>

A second embodiment relates to a conditional beam report.

In the second embodiment, the UE transmits a beam report when a condition is satisfied. With this, it is possible to reduce overhead of a less useful beam report while maintaining high quality beam management. Hence, the number of beam reports can be reduced, which can save power required for transmission by the UE.

Note that, in the present disclosure, a conditional beam report may be referred to as a UE triggered beam report (or measurement) and the like. In the present disclosure, a "condition" with no special note may be a condition for a conditional beam report (condition described in the second embodiment, report condition).

Note that an RS satisfying a condition may mean that the condition is satisfied for the RS while whether to satisfy the condition about another RS may be independent. In other words, although a given RS satisfies the condition, this does not necessarily mean that the report condition is satisfied.

The conditional beam report may be periodically/semi-persistently/aperiodically reported. For the UE, the condition may be judged periodically/semi-persistently/aperiodically, and the UE may transmit a beam report when the condition is satisfied while the UE may transmit no beam report (skip/cancel transmission) otherwise.

The UE may determine whether to report a beam report, based on a radio link quality. The UE may be configured with an RS resource for computing the radio link quality. This RS resource may be an RS resource for a conditional beam report or may be the same RS resource as that used for computation of an existing CSI related quantity.

The UE may compare a measured radio link quality with a threshold for evaluation and determine whether to report a beam report.

Note that, in the present disclosure, a radio link quality may be an L1-RSRP, may be a hypothetical L1-RSRP, may be the BLER of hypothetical PDCCH transmission, or may be any CSI related quantity.

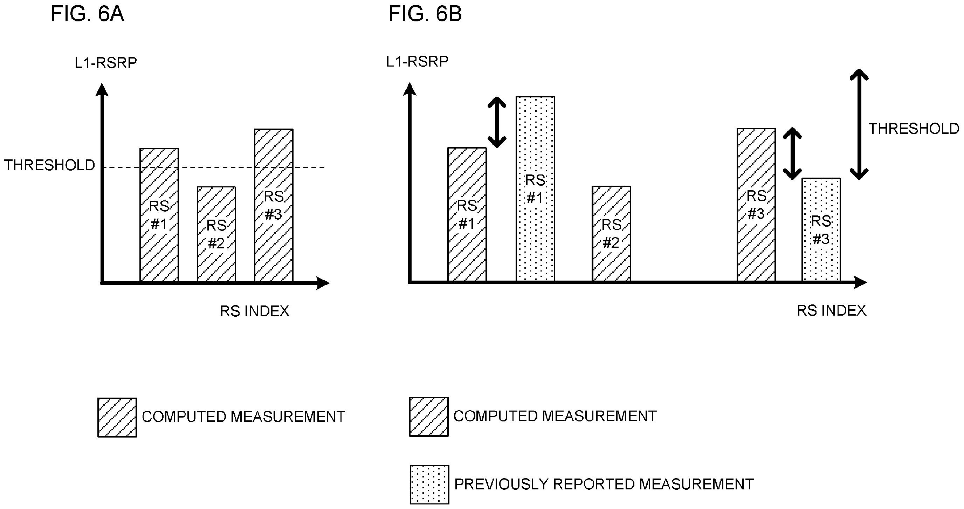

FIGS. 6A and 6B are diagrams to show an example of evaluation of radio link qualities according to the second embodiment. In FIG. 6A, the UE may check whether each computed measurement (calculated measurement) exceeds an L1-RSRP threshold and perform reporting for each RS having the measurement exceeding the threshold by a beam report. In the case of this example, the UE may perform reporting about RS #1 and RS #3 by a beam report. Note that the UE may evaluate the calculated radio link quality of an RS for which an existing CSI related quantity has been reported previously, with respect to the threshold.

Note that, in the present disclosure, a computed measurement may be a current measurement (radio link quality) or a predicted future measurement (based on a current measurement).

In FIG. 6B, the UE may compute the difference between each computed measurement and a previously reported measurement (previous reported measurement), check whether the difference exceeds a threshold, and perform reporting for each RS having the difference exceeding the threshold by a beam report. In the case of this example, since the difference is equal to or smaller than the threshold for each of RS #1 and RS #3, the UE does not perform reporting about RS #1 and RS #3 by a beam report. For RS #2 having no previously reported measurement, the UE may perform reporting by a beam report irrespective of the threshold or may perform reporting by a beam report when the difference exceeds the threshold.

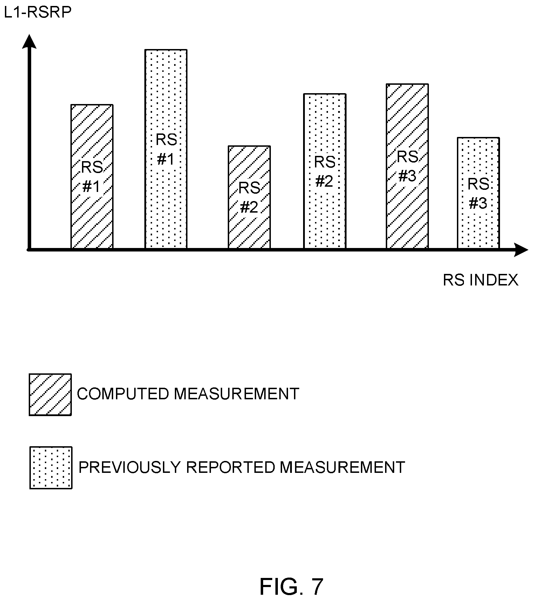

FIG. 7 is a diagram to show another example of the evaluation of radio link qualities according to the second embodiment. In FIG. 7, the UE may check whether the index of an RS that has the X best beams (highest (best) radio link qualities) has changed and perform, if the index has changed, reporting for the RS having the X best beams after the change (in other words, in computed measurements) by a beam report. In the case of this example, when it is assumed that X = 2, the two best beams are RSs #1 and #2 in previously reported measurements, while the two best beams are RSs #1 and #3 in computed measurements. In this case, the UE may perform reporting about RS #1 and RS #3 by a beam report. In other words, if X best beams do not change from those in previous measurements, transmission of a beam report may be omitted.

Note that, in these descriptions, a case of assuming control that the UE transmits, if there is at least one RS having a radio link quality satisfying the condition, a beam report including an existing/new CSI related quantity(ies) about the RS(s) while not transmitting a beam report if there is no such RS has been described, but this is not restrictive. For example, the UE may transmit, if there is at least one RS having a radio link quality satisfying the condition for a group of given RSs (for example, a group of RSs configured as targets of conditional beam reporting), a beam report including existing/new CSI related quantities about all the RSs in the set. Note that a method of selecting a reporttarget RS index will be described below in a fourth embodiment.

Note that, the UE may determine the threshold, X, and the like, based on a specific rule, may determine these, based on physical layer signaling (for example, DCI), higher layer signaling (for example, RRC signaling, a MAC CE), or a specific signal/channel, or a combination of these, or may determine these, based on UE capability.

The threshold, X, and the like may be configured/determined for each RS or may be configured/determined for each RS group. For example, when a transmission power is different for each RS, the threshold is preferably configured for each RS.

The UE may determine how many most recent RSs can (or cannot) be used for beam measurement (or beam reporting), based on a specific rule, may determine this, based on physical layer signaling (for example, DCI), higher layer signaling (for example, RRC signaling, a MAC CE), or a specific signal/channel, or a combination of these, or may determine this, based on UE capability. The UE may derive computed measurements, based on measurement results of (for example, by averaging) the most recent RSs corresponding to the number configured/determined to be able to be used for beam measurement (or beam reporting).

The UE may determine how recent RSs can (or cannot) be used for beam measurement (or beam reporting), based on a specific rule, may determine this, based on physical layer signaling (for example, DCI), higher layer signaling (for example, RRC signaling, a MAC CE), or a specific signal/channel, or a combination of these, or may determine this, based on UE capability. The UE may judge that RSs up to a period (for example, slots, subframes, seconds) configured/determined to be able to be used for beam measurement (or beam reporting) are valid for radio link quality, and derive computed measurements, based on the RSs corresponding to the period before reporting of the beam report.

### {RS(s) Used for Computation of CSI Related Quantity(ies)}

The UE may determine which RS(s) to use for calculation of a CSI related quantity(ies), based on a specific rule, may determine this, based on physical layer signaling (for example, DCI), higher layer signaling (for example, RRC signaling, a MAC CE), or a specific signal/channel, or a combination of these, or may determine this, based on UE capability.

The UE may compute a CSI related quantity(ies) to report, based on at least one of the following:
- period A: an RS(s) before the condition is satisfied or satisfying the condition,
- period B: an RS(s) before transmission of a scheduling request (SR) for beam reporting,
- period C: an RS(s) before reception of a PDCCH (DCI) for scheduling beam reporting, and
- period D: all usable RSs before transmission of a beam report.

Note that for the period D, thresholds Z and Z' (or CSI calculation times) as those described in a seventh embodiment to be described below may be considered.

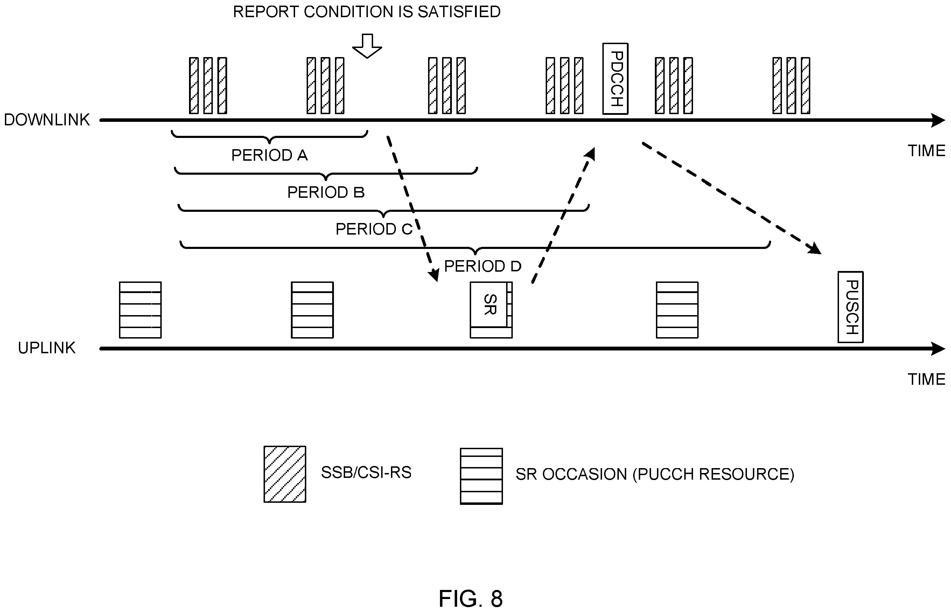

FIG. 8 is a diagram to show an example of RSs used for computation of CSI related quantities according to the second embodiment. This example shows a flow in which the UE measures SSBs/CSI-RSs, and as a result of the above-described condition being satisfied, transmit an SR by using a PUCCH resource, the base station transmits, in response to this, a PDCCH for scheduling a PUSCH, and lastly the UE transmits the PUSCH including a beam report.

FIG. 8 shows SSBs/CSI-RSs corresponding to the above-described periods A to D.

According to the second embodiment described above, a conditional beam report can be transmitted appropriately.

### <Third Embodiment>

A third embodiment relates to a conditional beam report.

In the second embodiment, the condition of a conditional beam report has been described. In the third embodiment, a configuration of the beam report will be described. In other words, when the condition in the second embodiment is satisfied, the UE may transmit a beam report by using the configuration of the third embodiment.

### {CSI on PUCCH}

The UE may transmit a conditional beam report by using a PUCCH (such transmission is also referred to as CSI on PUCCH). In this case, the conditional beam report may correspond to CSI part 1 / part 2 or may correspond to a new CSI part.

The UE may determine a PUCCH resource for the conditional beam report, based on a specific rule, may determine this, based on physical layer signaling (for example, DCI), higher layer signaling (for example, RRC signaling, a MAC CE), or a specific signal/channel, or a combination of these, or may determine this, based on UE capability.

The UE may determine whether to accommodate (or transmit) a beam report only when the condition is satisfied, based on a specific rule, may determine this, based on physical layer signaling (for example, DCI), higher layer signaling (for example, RRC signaling, a MAC CE), or a specific signal/channel, or a combination of these, or may determine this, based on UE capability. Note that whether to accommodate (or transmit) a beam report only when the condition is satisfied may be configured for each CSI report (or CSI report configuration) or may be configured for each report configuration type (RRC parameter reportConfigType, periodic/semi-persistent/aperiodic) .

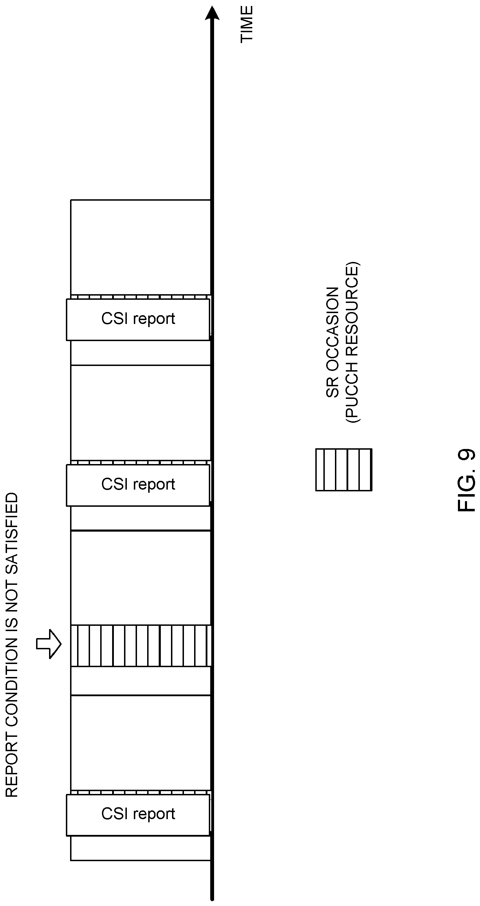

FIG. 9 is a diagram to show an example of conditional beam reporting using a PUCCH according to the third embodiment. In this example, periodic conditional beam reporting is shown. The UE transmits a beam report in a PUCCH resource when the condition is satisfied while not transmitting any beam report when the condition is not satisfied.

### {CSI on PUSCH}

The UE may transmit a conditional beam report by using a PUSCH (such transmission is also referred to as CSI on PUSCH). In this case, the conditional beam report may correspond to CSI part 1 / part 2, may correspond to a new CSI part, or may be transmitted by using a MAC CE.

When the condition is satisfied, the UE may trigger a MAC CE showing a beam report using a PUSCH (referred to simply as a beam report MAC CE below). In other words, when the condition is satisfied, the UE may trigger an SR for scheduling a PUSCH for transmitting the beam report MAC CE. The UE may be configured (provided) with a scheduling request ID for the beam report MAC CE by higher layer signaling.

When the PUSCH is scheduled after the transmission of the SR, the UE may transmit the MAC CE by using the PUSCH. Note that, when the condition is satisfied and a PUSCH usable from now is already scheduled, the UE may transmit the MAC CE by using the PUSCH without transmission of an SR.

Note that scheduling of a PUSCH here may correspond to scheduling of a dynamic grant PUSCH based on DCI or may correspond to activation of (configuration of) a configured grant PUSCH based on RRC signaling (and

### DCI) .

The beam report MAC CE may include at least one of the following information (fields):
- information indicating a cell in which measurement has been performed (information indicating whether it is a serving cell index, a secondary cell (SCell) index, or a special cell (SpCell)),
- information indicating a measured RS (for example, an RS index),
- information indicating the type of an RS index (for example, CRI or SSBRI),
- information indicating a measured existing CSI related quantity (for example, an L1-RSRP),
- information indicating a measured new CSI related quantity,
- information indicating selection policy,
- information indicating a time offset,
- information indicating whether a given octet is present in this MAC CE,
- information indicating how many measured RS resources are reported by this MAC CE (in other words, information of the number of reports),
- information indicating the bit width of an existing/new CSI related quantity, and
- information indicating which existing/new CSI related quantity(ies) is included.

The RS index may correspond to the index of CSI-RSs / SSB resource for which the UE has measured an existing/new CSI related quantity.

The selection policy and the time offset will be described in embodiments to be described below.

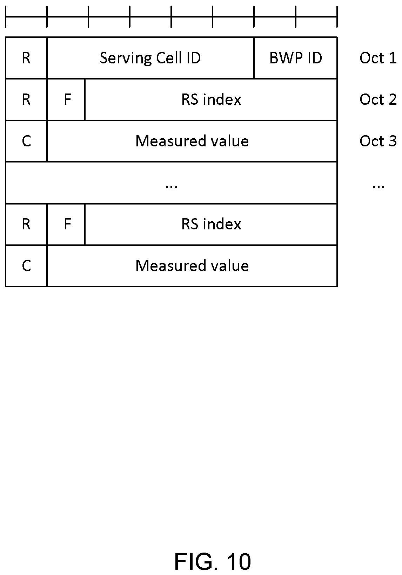

FIG. 10 is a diagram to show an example of a beam report MAC CE according to the third embodiment. The MAC CE may include a serving cell ID field, a BWP ID field, an F field, an RS index field, a C field, a measured value field, and the like.

The serving cell ID field may be a field for indicating a serving cell in which measurement has been performed. The BWP ID field may be a field for indicating a DL BWP in which measurement has been performed.

The F field may indicate the type of the following RS index field. For example, when the value in the F field is '1,' this indicates that the RS index field is a CSI-RS index (CSI-RS resource index), and when the value in the F field is '0,' this may indicate that the RS index field is an SSB index.

The measured value field may indicate a value related to a specific existing/new CSI related quantity. The measured value field may be interpreted as a CSI related quantity field and vice versa.

The C field may indicate whether an RS index field / measured value field is present subsequent to this C field. For example, when the value in the C field is '1,' this may indicate that an octet including an RS index field / measured value field subsequent to this C field is present, and when the value in the C field is '0,' this may mean that no octet including an RS index field / measured value field subsequent to this C field is present.

When reporting of a beam report MAC CE is activated, the UE may perform control to transmit the beam report MAC CE.

### {Size of Beam Report MAC CE}

For reporting of a beam report MAC CE, the UE may be configured with a different maximum number of RSs (for example, the number of RSs to measure) for each CSI-RS resource set by higher layer signaling. According to this configuration, size adjustment of a MAC CE can be performed easily.

For the reporting of the beam report MAC CE, the UE may be configured with the number of RSs supposed to be reported (the number of RSs to measure) by higher layer signaling. According to this configuration, size adjustment of the RS index fields can be performed easily, which can prevent the size of the MAC CE from being huge.

For the reporting of the beam report MAC CE, the UE may be configured with CSI related quantities supposed to be reported / the granularity of the CSI related quantities by higher layer signaling. According to this configuration, the size of the MAC CE and measurement quality to be reported can be balanced out.

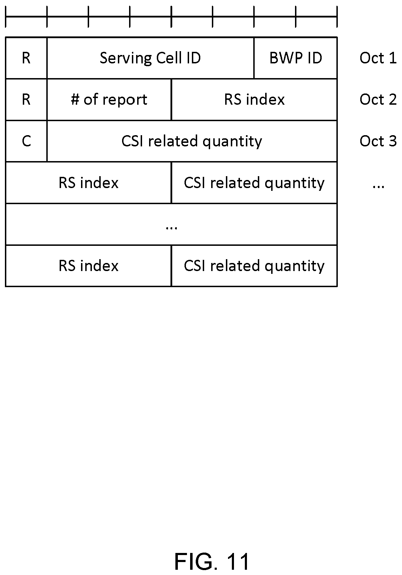

FIG. 11 is a diagram to show an example of a beam report MAC CE according to the third embodiment. The MAC CE may include the number of report field. In this example, no repeated description will be given of contents that may be similar to those in FIG. 10 (no repeated description being given of contents already described also applies to the subsequent drawings).

In FIG. 11, the size of each RS index field is smaller than that in FIG. 10 (six bits to four bits). By configuring the maximum number of RSs to be monitored (measured), the size of the RS index fields can be reduced as described above. While the first CSI related quantity field in FIG. 11 has seven bits, each of the remaining CSI related quantity fields is reduced to have four bits. Thus, the granularity of a CSI related quantity may be configured/determined to be different for the CSI related quantity corresponding to the first RS and each of the other CSI related quantities.

The UE may judge that the size of the beam report MAC CE is fixed (predetermined) or may judge the size, based on at least one of the following:
- a maximum number of configured RSs for reporting CSI related quantities,
- the number of configured RSs for reporting CSI related quantities,
- type/kind of CSI related quantities (for example, which CSI related quantity),
- granularity(ies) of CSI related quantities, and
- fields of the MAC CE.

For example, when the (maximum) number of configured RSs is X (X is an integer), the number of octets each representing a bit field indicating whether the CSI related quantity corresponding to an RS is present in the MAC CE may be expressed by ceil(X/8). Note that ceil(*) denotes a ceiling function.

The bit width of each CSI related quantity field may be determined based on the granularity, type, and the like of the CSI related quantity. The bit width of each RS index field may be determined based on the (maximum) number of configured RSs.

The fields of the MAC CE may correspond to at least one of the following:
- the number of fields each indicating an RS resource supposed to be reported (for example, the number of one-bit fields each indicating whether the CSI related quantity related to the RS of a corresponding RS index is included in the MAC CE),
- information indicating whether a given octet is present in this MAC CE (for example, the C field described above), and
- field indicating the number of CSI related quantities to be reported (or the number of report field).

The UE may include octets each indicating a CSI related quantity in the beam report MAC CE, the number of octets corresponding to the number of CSI related quantities indicated by a field indicating the number of CSI related quantities to be reported, for example.

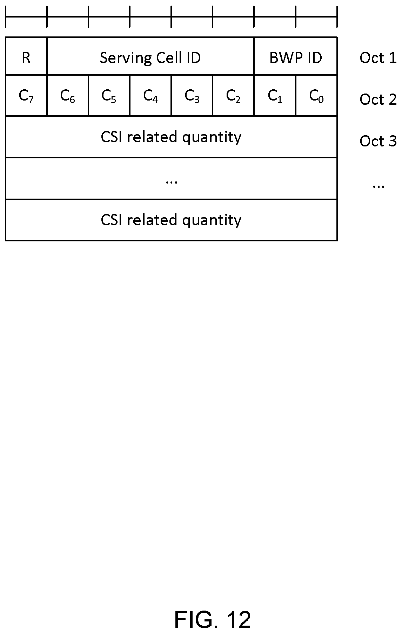

FIG. 12 is a diagram to show an example of a beam report MAC CE according to the third embodiment. The MAC CE may include Cᵢ fields. Each Cᵢ field corresponds to a bit field indicating whether the CSI related quantity corresponding to the RS corresponding to the i-th (here, i = 0 to 7) RS index is present in the MAC CE (for example, if the field indicates '1,' the CSI related quantity is present). The number of Cᵢ fields may be determined according to the (maximum) number of configured RSs. According to the Cᵢ field, the number of CSI related quantity fields included in this MAC CE varies.

Note that the size of each CSI related quantity field may be determined based on the granularity, type, and the like of the CSI related quantity.

Note that the beam report MAC CE described above may be interpreted as a CSI report and vice versa. This CSI report may also be applied to a CSI report transmitted in UCI on PUCCH described above. The UE may transmit a CSI report including information corresponding to the various fields included in the beam report MAC CE, as a beam report, for example.

### {RS(s) Used for Computation of CSI Related Quantity(ies)}

The UE may compute a CSI related quantity(ies) to report, based on an RS(s) in at least one of the following periods:
- period a: one or more most recent (or newest) RSs satisfying the condition,
- period b: one or more first RSs satisfying the condition, and
- period c: one or more most recent (or newest) RSs irrespective of whether to satisfy the condition.

Note that for the period c, the thresholds Z and Z' (or CSI calculation times) as those described in the seventh embodiment to be described below may be considered.

The UE may determine the number of RSs whose measurement results are to be used for computation of a CSI related quantity(ies), based on a specific rule, may determine the number, based on physical layer signaling (for example, DCI), higher layer signaling (for example, RRC signaling, a MAC CE), or a specific signal/channel, or a combination of these, or may determine the number, based on UE capability.

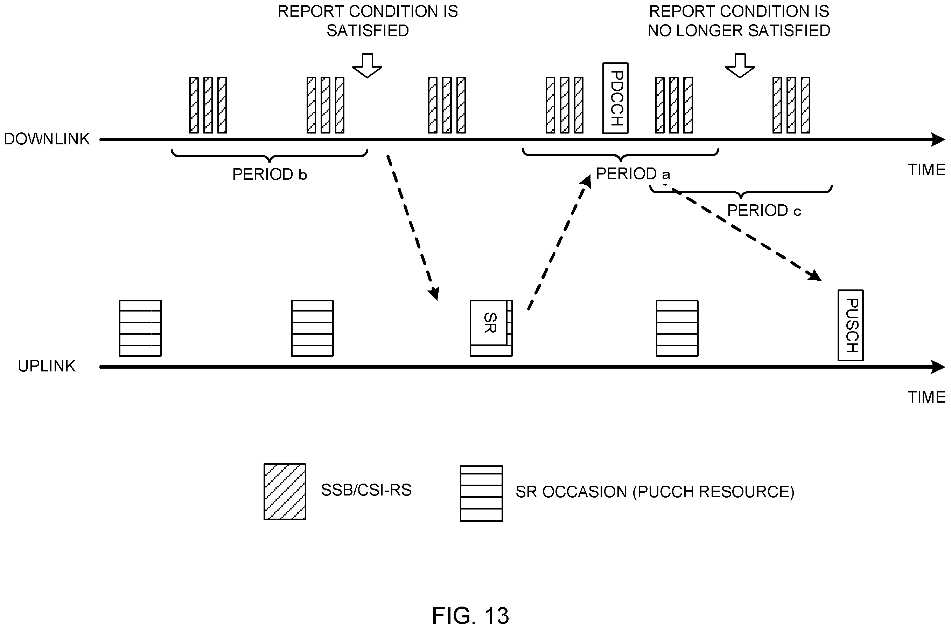

FIG. 13 is a diagram to show an example of RSs used for computation of CSI related quantities according to the third embodiment. This example shows a flow in which the UE measures SSBs/CSI-RSs, and as a result of the above-described condition being satisfied, transmit an SR by using a PUCCH resource, the base station transmits, in response to this, a PDCCH for scheduling a PUSCH, and lastly the UE transmits the PUSCH including a beam report. Note that, after reception of the PDCCH and before the transmission of the PUSCH, the above-described condition is no longer satisfied.

FIG. 13 shows SSBs/CSI-RSs corresponding to the above-described periods a to c. The period a includes one or more RSs that are newest when seen from the time point where the condition is no longer satisfied.

The UE may apply determination of beam reporting based on at least one of the above-described periods a to c, to both the PUCCH and the PUSCH.

### {Condition for Not Triggering SR / MAC CE for Beam Reporting}

When at least one of the following conditions is satisfied, the UE may not trigger an SR / MAC CE (PUSCH transmission) for beam reporting:
- the condition is no longer satisfied at the time of triggering,
- specific period has elapsed since satisfaction of the condition,
- specific period has elapsed since reception of an RS used for measurement satisfying the condition (or an RS satisfying the condition),

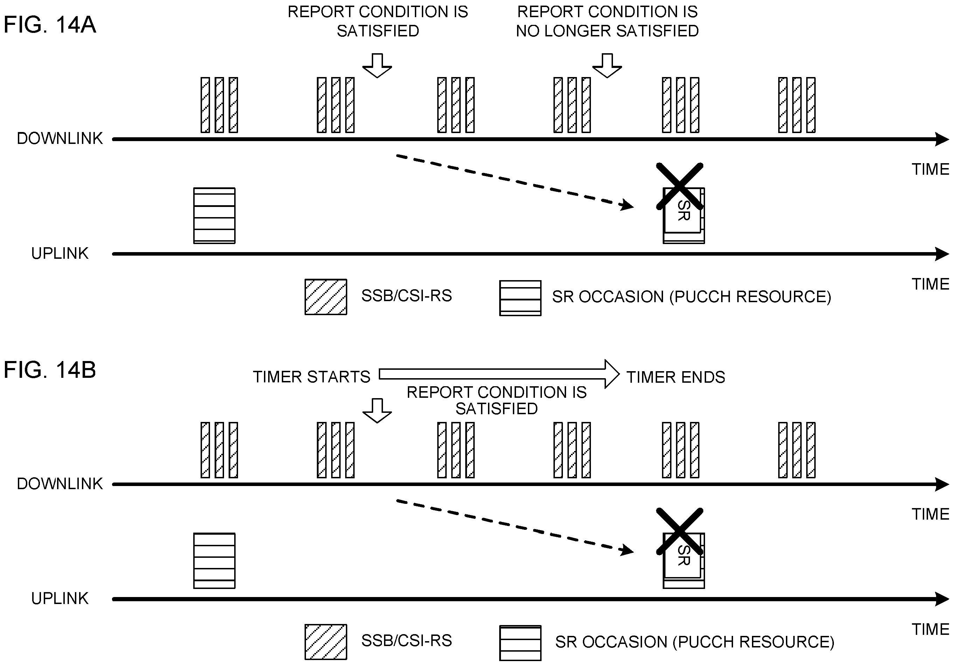

FIG. 14A and 14B are diagrams to show an example of control of presence/absence of a trigger of a beam report according to the third embodiment. These examples are similar to that in FIG. 13 but are different from that in FIG. 13 in that the periodicity of a PUCCH resource is long.

In FIG. 14A, since the report condition is once satisfied but is then no longer satisfied before trigger of an SR, the UE cancels the trigger of the SR.

In FIG. 14B, once the report condition is satisfied, a timer is started. Then, since the timer ends (specific period has elapsed) before triggering of an SR, the UE cancels the trigger of the SR.

According to the third embodiment described above, a conditional beam report can be transmitted appropriately.

### <Fourth Embodiment>

A fourth embodiment relates to selection of beam measurement to be reported.

In the fourth embodiment, the UE need not include measurement results for all the RS indices configured as report targets for a beam report, in the beam report.

The UE may select beam measurement to be reported, according to a configured RRC parameter. The UE may select an RS index for the beam report (corresponding to an L1-RSRP), based on the configured RRC parameter or a specific rule.

For example, the UE may select an RS index for the beam report, based on at least one of the following selection methods:
- selection method 1: RS index determined randomly,
- selection method 2: RS index enabling the highest L1-RSRP,
- selection method 3: RS index with the L1-RSRP having the largest difference from a previously reported L1-RSRP, and
- selection method 4: RS index with the oldest report of the newest L1-RSRP (in other words, an L1-RSRP is not reported in the longest period).

The base station that receives a beam report including the RS index enabling the highest L1-RSRP can find the RS corresponding to the highest L1-RSRP from among measured RSs.

The base station that receives a beam report including the RS index with the L1-RSRP having the largest difference from a previously reported L1-RSRP can preferably track abrupt changes of L1-RSRPs for all the measured RSs.

The base station that receives a beam report including the RS index with the oldest report of the newest L1-RSRP can preferably track relatively new measured values of the L1-RSRPs for all the measured RSs.

The UE may include the measurement result (for example, the CSI related quantity, the RS index, and the like) of the selected RS index in the beam report, for transmission. Note that, when the UE performs reporting for a plurality of RS indices, the UE may determine RS indices to report in a method of selecting a first RS index from among RS indices that can be reported by using the beam report, based on any of the above selection methods, and selecting a second RS index from among the remaining obtained by excluding the first RS index from the RS indices that can be reported, based on any of the above selection methods, ..., for example.

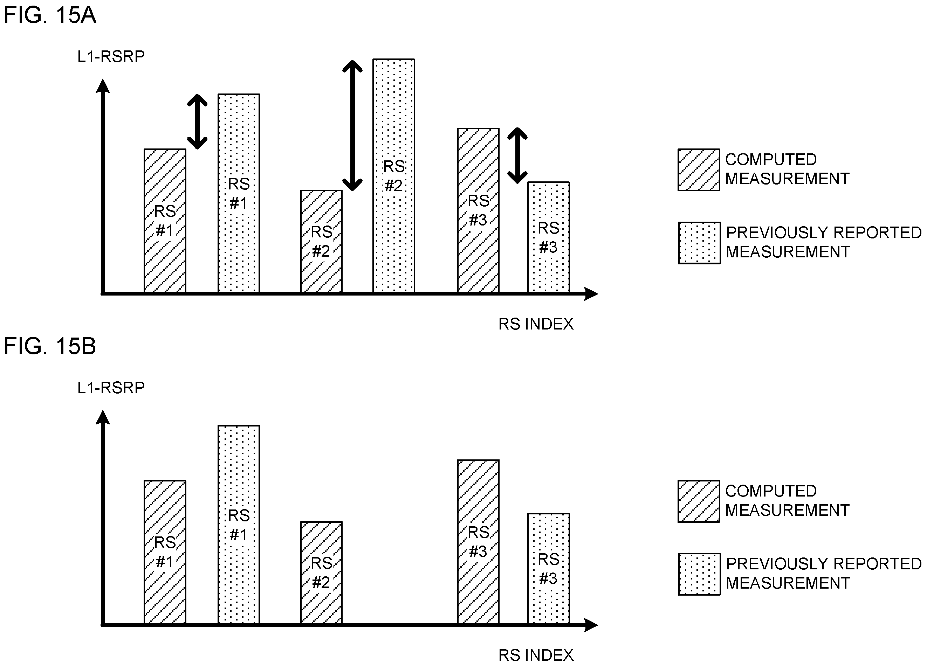

FIGS. 15A and 15B are each a diagram to show an example of selection of an RS to be reported according to the fourth embodiment. This example is similar to FIG. 7 and the like, and hence overlapping description is not given. In FIG. 15A, since an RS with the L1-RSRP having the largest difference from the previously reported L1-RSRP is RS #2 among the three measured RSs (RSs #1 to #3), the UE may perform control to include the L1-RSRP of RS #2 in a beam report for reporting.

In FIG. 15B, since an RS with the oldest report of the newest L1-RSRP among the three measured RSs (RSs #1 to #3) is RS #2 (for which no previously reported L1-RSRP is present), the UE may perform control to include the L1-RSRP of RS #2 in a beam report for reporting.

The UE may select a method of selecting an RS index for a beam report, based on an RRC parameter indicating selection policy (for example, selectionPolicy).

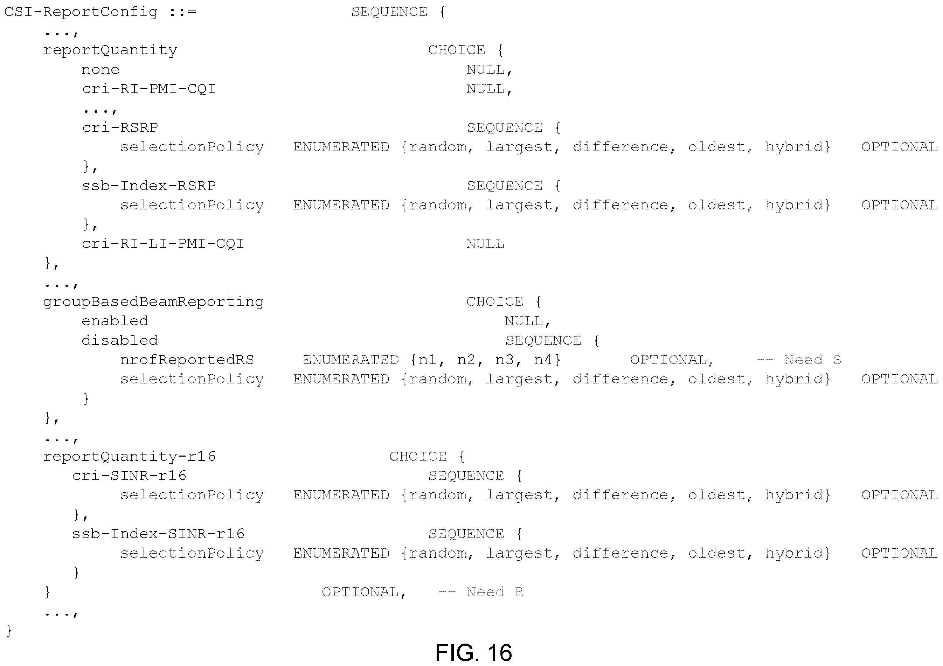

FIG. 16 is a diagram to show an example of RRC parameters indicating selection policy according to the fourth embodiment. In this example, description is given by using the Abstract Syntax Notation One (ASN.1) notation (note that this is merely an example and may not be complete description). Meanings of RRC information elements / parameters in the drawing having the same names as those of RRC information elements / parameters already defined in a specification of Rel-15/16 NR (TS 38.331) are obviously understood by those skilled in the art.

Note that, in the present disclosure, names of RRC information elements, RRC parameters, and the like are not limited to these, and may be added with a suffix indicating introduction in a specific release (for example, "_r18," "-r18," or the like), for example. The suffix need not be added, or another word may be added.

The RRC parameters indicating the selection policy may be included in a CSI report configuration (CSI-ReportConfig information elements). The RRC parameters indicating the selection policy may be included in parameters corresponding to an L1-RSRP/SINR report quantity (cri-RSRP, ssb-Index-RSRP, cri-SINR-r16, ssb-Index-SINR-r16) or may be included in RRC parameters related to group based beam reporting (groupBasedBeamReporting). Note that the RRC parameters indicating the selection policy may be included in other RRC parameters / information elements for configuration.

In FIG. 16, the RRC parameters indicating the selection policy are each an enumeration type value which can take any of the values {random, largest, difference, oldest, hybrid}. Here, random, largest, difference, oldest may indicate the above-described selection methods 1 to 4, respectively. Hybrid may indicate a combination of two or more of the above-described selection methods 1 to 4.

Note that, when no RRC parameter indicating selection policy related to a given CSI report is configured, the UE may judge a selection method according to default (or defined) selection policy (for example, any of the selection methods 1 to 4) for the CSI report.

According to the fourth embodiment described above, the UE can appropriately report a beam measurement value useful for beam management using AI, for example.

### <Fifth Embodiment>

A fifth embodiment relates to the granularity of a CSI related quantity.

The UE may report each CSI related quantity according to a different granularity (for example, a step size in decibel (dB), which is also referred to simply as a step size below) in a beam report.

The UE may report the absolute values of a plurality of L1-RSRPs or may report a plurality of difference values with respect to one absolute value, in a beam report. Here, the step sizes of the absolute value and the difference value(s), the step sizes of the plurality of absolute values, the step sizes of the plurality of difference values, and the like may be different from each other.

The UE may report an absolute value for the largest L1-RSRP value and report a difference value with respect to the largest L1-RSRP value for another L1-RSRP value(s), in a beam report.

The UE may determine the step size of each L1-RSRP value, based on a specific rule, may determine the step size, based on physical layer signaling (for example, DCI), higher layer signaling (for example, RRC signaling, a MAC CE), or a specific signal/channel, or a combination of these, or may determine the step size, based on UE capability.

For example, the UE may be configured with an RRC parameter indicating the step size to be used in a beam report. The UE may be configured with separate step sizes or a common (unified) step size for the absolute value and difference value of the L1-RSRP in the beam report.

The UE may determine the step size of each L1-RSRP, based on at least one of the various configurations described in the first/second/third/fourth/sixth embodiments. For example, when a specific RRC parameter (for example, selection policy = difference/oldest/hybrid) is configured, the UE may determine to report the L1-RSRPs according to relatively small step sizes.

The UE may determine the step size of each L1-RSRP, based on the range and the number of bits of the L1-RSRP value. When two of the range of the L1-RSRP value, the number of bits of the L1-RSRP, and the step size of the L1-RSRP are configured/defined, the UE may determine the remaining one, based on the two.

The UE may assume that the range of the largest L1-RSRP value is always a first range (for example, [-140, 44] dBm) and the range of the largest L1-SINR value is always a second range (for example, [-23, 40] dBm). Note that, in the present disclosure, each range may be defined by a largest value and a smallest value or may be defined by an average value (or a median value) and a largest possible difference from the value.

The UE may assume that the range of each L1-RSRP value may be a different range according to the corresponding step size / number of bits.

The UE may determine the range of each L1-RSRP value, based on a specific rule, may determine the range, based on physical layer signaling (for example, DCI), higher layer signaling (for example, RRC signaling, a MAC CE), or a specific signal/channel, or a combination of these, or may determine the range, based on UE capability.

The UE may assume that the number of bits of the L1-RSRP value is always the same.

The UE may alternatively assume that the number of bits of the L1-RSRP value is different according to the corresponding step size / range.

The UE may determine the number of bits of each L1-RSRP value, based on a specific rule, may determine the number, based on physical layer signaling (for example, DCI), higher layer signaling (for example, RRC signaling, a MAC CE), or a specific signal/channel, or a combination of these, or may determine the number, based on UE capability.

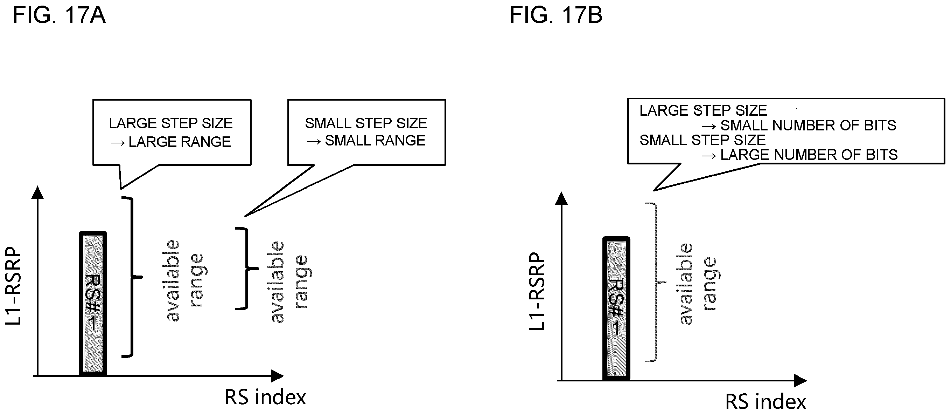

FIGS. 17A and 17B are diagrams to show examples of a range(s) and the number of bits of an L1-RSRP according to the fifth embodiment.

FIG. 17A shows an example of a case where the range of the L1-RSRP value differs according to the corresponding step size / number of bits while the number of bits of the L1-RSRP is the same irrespective of the corresponding step size. Since the number of bits is the same, the range is large when the step size is relatively large while being small when the step size is relatively small.

FIG. 17B shows an example of a case where the range of the L1-RSRP value is the same while the number of bits of the L1-RSRP differs according to the corresponding range / step size. Since the range is the same, the number of bits is small when the step size is relatively large while being large when the step size is relatively small.

According to the fifth embodiment described above, the UE can appropriately determine the granularity of each CSI related quantity.

### <Sixth Embodiment>

A sixth embodiment relates to a beam report including a number of CSI related quantities.

The maximum number of L1-RSRP values (or RS indices) included in a beam report may be determined based on the selection policy described in the fourth embodiment and the ranges / numbers of bits / step sizes of L1-RSRP values described in the fifth embodiment.

For example, when the step sizes of the L1-RSRPs in the beam report are twice as large as (or half of) those in Rel-15/16 NR, the UE may be configured to include eight L1-RSRP values in the beam report.

The number of RSs to be reported in a beam report in an existing Rel-15/16 specification is configured by the RRC parameter nrofReportedRS also shown in FIG. 16. In the present disclosure, this number of RSs configured by nrofReportedRS may be enhanced from four, which is the maximum number of existing RS, and may be configurable to be six, seven, eight, ten, or the like, for example.

This configured number of RSs may be a maximum number of RSs to be included in the beam report, and the number of RSs to be reported in the beam report may be reduced from the maximum number of RSs as described in the fourth embodiment, for example.

The UE may determine the number of L1-RSRP values (or RS indices) to be included in a beam report, based on a specific rule, may determine the number, based on physical layer signaling (for example, DCI), higher layer signaling (for example, RRC signaling, a MAC CE), or a specific signal/channel, or a combination of these, or may determine the number, based on UE capability.

The UE may determine, based on whether a beam report is transmitted by using UCI or transmitted by using a MAC CE (beam report MAC CE), the (maximum) number of CSI related quantities to be included in the beam report. For example, when a beam report MAC CE is used, the UE may perform control to report a larger number of CSI related quantities than that in a case of transmitting the beam report by using UCI. This considers that a PUSCH is more suitable for transmission of mass data than a PUCCH.

When the beam report is transmitted by using UCI, the UE may determine the (maximum) number of CSI related quantities to be included in the beam report, based on whether the UCI is transmitted by using a PUSCH or transmitted by using a PUCCH.

According to the sixth embodiment described above, the UE can appropriately determine the number of CSI related quantities to be included in a beam report.

### <Seventh Embodiment>

A seventh embodiment relates to a predicted beam report.

The UE may report a predicted beam report including estimated/predicted radio link qualities at a future time (which may be referred to as a predicted CSI time, a prediction time, prediction timing, and the like), based on current/past RS measurements (radio link qualities).

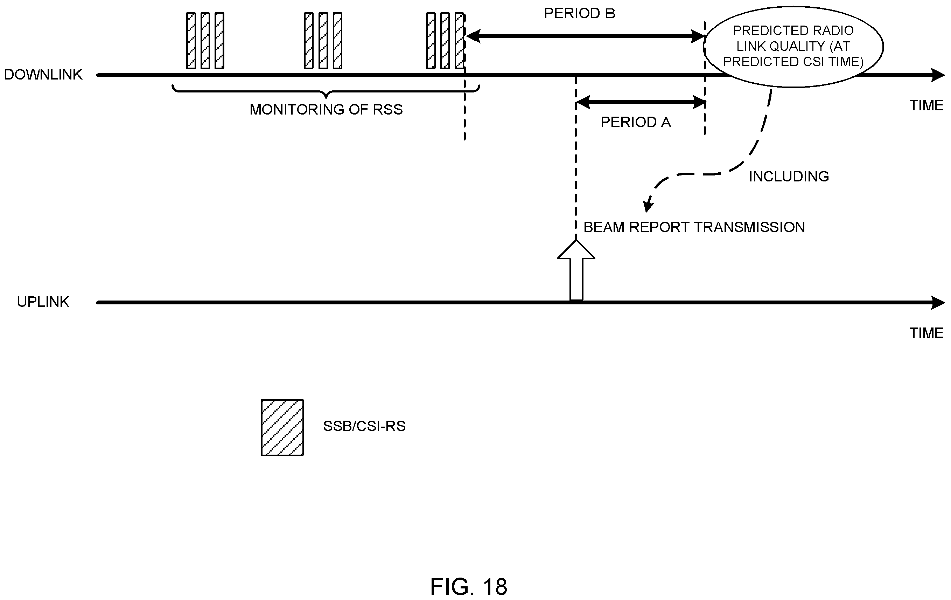

FIG. 18 is a diagram to show an example of predicted beam report related control according to the seventh embodiment. The UE may monitor RSs (SSBs/CSI-RSs) and transmit a predicted beam report including predicted radio link qualities at a predicted CSI time, which is a time offset after given timing.

Here, the given timing may be a time when the predicted beam report is transmitted (which may be referred to as a reporting occasion) or may be timing of receiving a specific RS measured for prediction (for example, the last timing of receiving the specific RS before transmission of the predicted beam report). The time offset in the former case corresponds to a period A shown in the drawing, and the time offset in the latter case corresponds to a period B shown in the drawing. The given timing may be referred to as a reference time.

The time offset may be expressed in slots/symbols or may be expressed in seconds (for example, milliseconds), for example.

The UE may determine the time offset, based on a specific rule, may determine the offset, based on physical layer signaling (for example, DCI), higher layer signaling (for example, RRC signaling, a MAC CE), or a specific signal/channel, or a combination of these, or may determine the offset, based on UE capability.

The UE may include information related to the predicted CSI time in the predicted beam report for reporting.

Note that, in the present disclosure, a predicted CSI time and a time offset may be interchangeably interpreted.

### {Predicted CSI Time}

The UE may include information related to a quantized predicted CSI time in the predicted beam report for reporting.

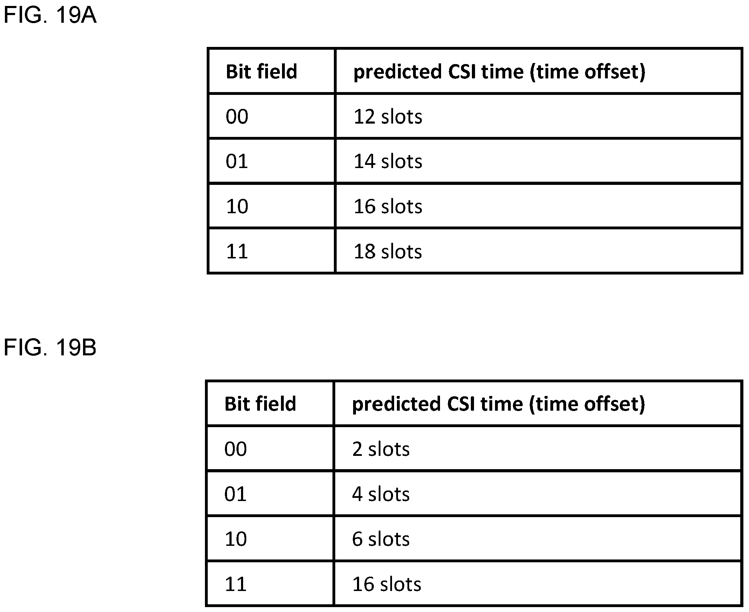

FIGS. 19A and 19B are each a diagram to show an example of information of the quantized predicted CSI time.

The UE may transmit a bit field indicating one time offset selected from configured time offsets, as the information of a predicted CSI time. In FIG. 19A, the UE assumes that four time offsets (12, 14, 16, and 18 slots) corresponding to respective bit fields are configured by using an RRC parameter.

Note that, when the UE is configured only with one time offset, the UE need not include the information of a predicted CSI time in the predicted beam report (since the base station knows the time offset assumed by the UE).

The UE may transmit a bit field indicating one time offset selected from predefined time offsets, as the information of the predicted CSI time. In FIG. 19B, the four time offsets (2, 4, 6, and 8 slots) corresponding to respective bit fields may be predefined in a specification, for example.

Note that, when the UE deals with the time offset, the UE may determine a time duration available for prediction, based on the time offset. One or more predicted CSI times may be present during the time duration.

In the present disclosure, to determine the time duration, the UE may report/receive/determine/configure a time offset and a window size instead of the time offset.

The UE may predict a radio link quality in a specific time instant (for example, a specific slot) during the time duration specified by the time offset and the window size.

In the present disclosure, to determine the time duration, the UE may report/receive/determine/configure two time offsets instead of one time offset.

The UE may predict a radio link quality in a specific time instant (for example, a specific slot) during the time duration specified by the two time offsets.

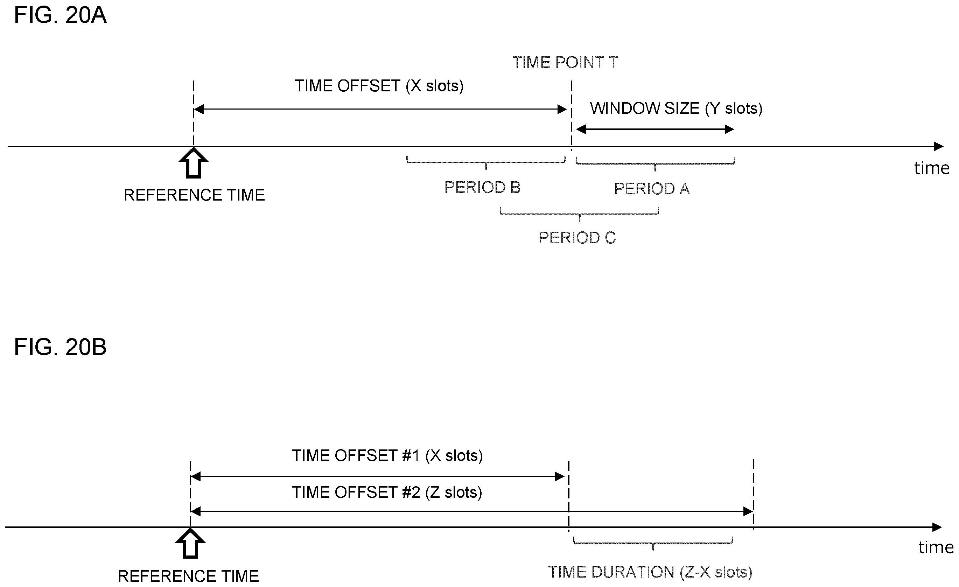

FIGS. 20A and 20B are each a diagram to show an example of a time duration available for prediction.

FIG. 20A shows an example in which the time duration is specified by a time offset and a window size. The time duration may be at least one of periods A to C shown in the drawing. The period A is a period of a window size width with a point (time point T) specified by the time offset with reference to a reference time as a start time (period after the point). The period B is a period of the window size width with a point (time point T) specified by the time offset with reference to the reference time as an end time (period before the point). The period C is a period of the window size width with a point (time point T) specified by the time offset with reference to the reference time as the center of the window size width (including periods before and after the point).

FIG. 20B shows an example in which the time duration is specified by two time offsets (first time offset, second time offset). The time duration may be a period shown in the drawing. This period is a period with one of a point specified by the first time offset with reference to the reference time and a point specified by the second time offset with reference to the reference time as a start time and with the other point as an end time. When it is assumed that the second time offset (for example, a Z slot) > the first time offset (for example, an X slot), the length of this period may be expressed by Z - X, for example.

### {Contents of Predicted Beam Report}

A predicted beam report may include at least one piece of information including the beam report / beam report MAC CE described in the third embodiment (also referred to simply as CSI information, CSI information without prediction, and the like) or may include predicted information about at least one piece of the CSI information in a predicted CSI time (also referred to simply as predicted CSI information, CSI information with prediction, and the like).

In other words, the predicted beam report may include only the predicted CSI information or may include both the CSI information without prediction and the predicted CSI information.

For example, the predicted beam report may include information of existing CSI related quantities (L1-RSRPs or the like), information of new CSI related quantities, and the like as the CSI information or may include information of predicted values of existing CSI related quantities, information of predicted values of new CSI related quantities, and the like as the predicted CSI information.

The predicted beam report may include information about one or a plurality of time instants (for example, a plurality of predicted CSI times). The UE may determine the number of time instants for reporting (or to include in the predicted beam report), based on a specific rule, may determine the number, based on physical layer signaling (for example, DCI), higher layer signaling (for example, RRC signaling, a MAC CE), or a specific signal/channel, or a combination of these, or may determine the number, based on UE capability.

The UE may determine whether to include the CSI information without prediction in the predicted beam report, based on a specific rule, may determine the number, based on physical layer signaling (for example, DCI), higher layer signaling (for example, RRC signaling, a MAC CE), or a specific signal/channel, or a combination of these, or may determine the number, based on UE capability.

The UE may include information related to whether specific CSI information included in the predicted beam report is the CSI information without prediction or the predicted CSI information, in the predicted beam report. For example, CSI information corresponding to a time offset may correspond to the predicted CSI information. Note that CSI information corresponding to time offset = 0 and CSI information not corresponding to a time offset may correspond to the CSI information without prediction.

The UE may determine which CSI information in terms of order in the predicted beam report is the CSI information without prediction or the predicted CSI information, based on a specific rule, may determine this, based on physical layer signaling (for example, DCI), higher layer signaling (for example, RRC signaling, a MAC CE), or a specific signal/channel, or a combination of these, or may determine this, based on UE capability.

In the example shown in FIG. 1, the UE may include CSI information without prediction at a time point t = 0 and predicted CSI information at a time point t = 1 in the predicted beam report for transmission to the BS.

### {Reporting of Prediction Accuracy}

The UE may report information related to prediction accuracy of predicted CSI information (referred to as prediction accuracy information below). The prediction accuracy information may include information related to accuracy of past prediction (past prediction performance) (also referred to as past prediction information below) or may include information related to expected future prediction accuracy (expected performance) (also referred to as future prediction accuracy information below) .

The past prediction accuracy information may include at least one of the following:
- CSI information without prediction about reported predicted CSI information,
- information indicating whether predicted error is included within a given range, and
- average performance error.

Here, the CSI information without prediction about the reported predicted CSI information may correspond to CSI information without prediction based on measurement at the time when it actually reaches, after transmission of a beam report including predicted CSI information about a given predicted CSI time, the predicted CSI time. Note that the UE may report a difference value with respect to a predicted value indicated by the reported predicted CSI information, as this CSI information without prediction.

When the information indicating whether predicted error is included within the given range may indicate whether the error is included within a range of the X% confidence interval (for example, X = 95). The information may be expressed by Y bit(s) (for example, Y = 1). This predicted error may be expressed by an error (difference) between a predicted RSRP and an RSRP actually measured at the time point, for example.

The UE may determine this given range, based on a specific rule, may determine the range, based on physical layer signaling (for example, DCI), higher layer signaling (for example, RRC signaling, a MAC CE), or a specific signal/channel, or a combination of these, or may determine the range based on UE capability.

The average performance error may correspond to a given time interval or average performance error information for a specific number of measurement times.

The UE may determine this time interval or number of measurement times, based on a specific rule, may determine this, based on physical layer signaling (for example, DCI), higher layer signaling (for example, RRC signaling, a MAC CE), or a specific signal/channel, or a combination of these, or may determine this, based on UE capability.

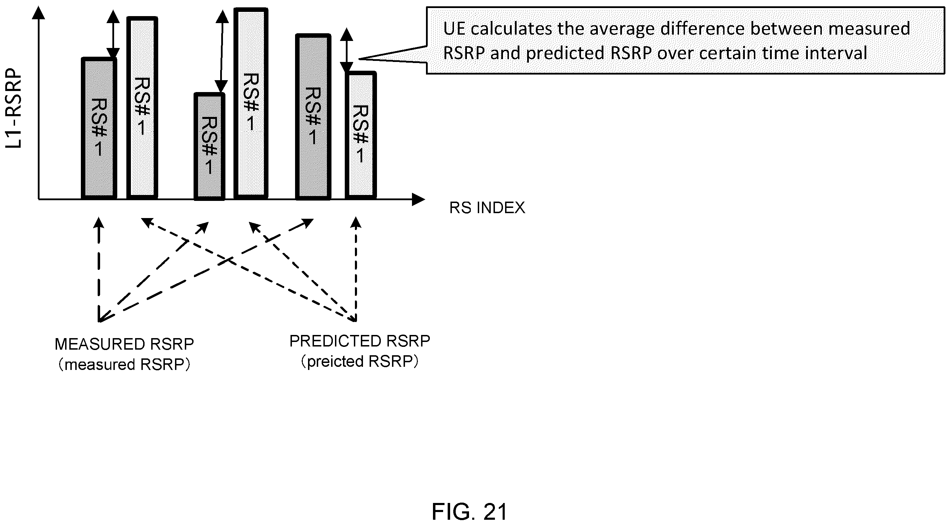

FIG. 21 is a diagram to show an example of computation of prediction accuracy according to the seventh embodiment. In this example, three predicted RSRPs and RSRPs actually measured at the time point are shown for same RS #1 over a given time interval. The UE may compute the average error between the measured RSRPs and the predicted RSRPs at the three respective time instants in the period shown in the drawing and report this to the base station as average performance error (past prediction accuracy information).

The future prediction accuracy information may include at least one of the following:
- expected difference between predicted values (for example, predicted RSRPs) and measured values (for example, measured RSRPs) to be used for prediction of the predicted value,
- information related to dispersion of errors between predicted values and actual values,
- range within which Y% of prediction error fall, and
- average performance error.

For the range within which Y% of prediction error fall, for example, when the Y % of the error fall within ±3 dB, the UE may report ±3 dB.

The UE may determine this Y, based on a specific rule, may determine the Y, based on physical layer signaling (for example, DCI), higher layer signaling (for example, RRC signaling, a MAC CE), or a specific signal/channel, or a combination of these, or may determine the Y, based on UE capability.

The average performance error may correspond to a given time interval or average performance error information for a specific number of measurement times.

The UE may determine this time interval or number of measurement times, based on a specific rule, may determine this, based on physical layer signaling (for example, DCI), higher layer signaling (for example, RRC signaling, a MAC CE), or a specific signal/channel, or a combination of these, or may determine this, based on UE capability.

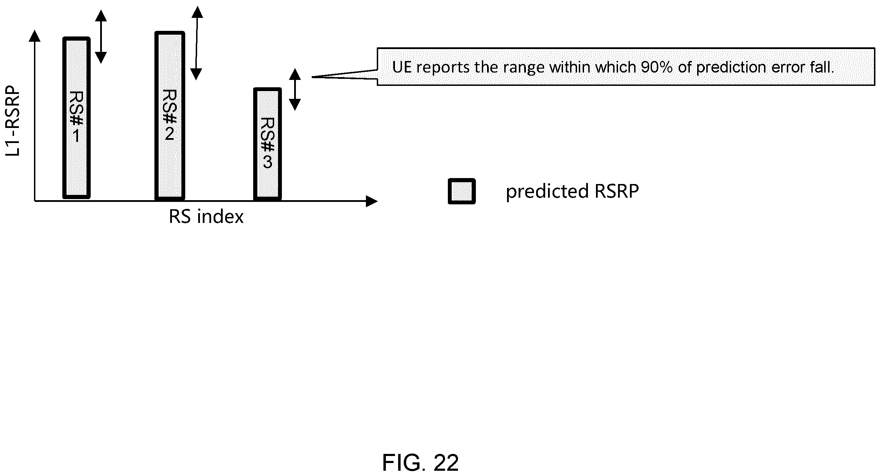

FIG. 22 is a diagram to show an example of computation of prediction accuracy according to the seventh embodiment. In this example, for RSs corresponding to three RS indices (RSs #1 to #3), respective predicted values and respective ranges within which 90% of prediction error fall are shown. The UE may report information indicating the ranges as future prediction accuracy information.

Note that the UE may report the prediction accuracy information for each RS index, may report the information for each RS group, or may report the information for all the RS indices.

The UE may determine the granularity of expected accuracy (precision), based on a specific rule, may determine this, based on physical layer signaling (for example, DCI), higher layer signaling (for example, RRC signaling, a MAC CE), or a specific signal/channel, a combination of these, or may determine this, based on UE capability.

### {Timing of Reporting of Prediction Accuracy Information}

The prediction accuracy information may be periodically/semi-persistently/aperiodically reported. The transmission periodicity of the prediction accuracy information may be the same as or different from the transmission periodicity of a predicted beam report.

The UE may determine the periodicity/timing of reporting of the prediction accuracy information, based on a specific rule, may determine this, based on physical layer signaling (for example, DCI), higher layer signaling (for example, RRC signaling, a MAC CE), or a specific signal/channel, or a combination of these, or may determine this, based on UE capability.

The UE may report the prediction accuracy information when at least one of the following conditions is satisfied:
- computed (or predicted) error falls outside a specific range X times,
- computed (or predicted) error is larger than or smaller than a threshold, and
- difference between reported error (prediction accuracy information reported in the past) and computed (or predicted) error is larger than a threshold.

The UE may determine the above-described range, X value, thresholds, and the like, based on a specific rule, may determine these, based on physical layer signaling (for example, DCI), higher layer signaling (for example, RRC signaling, a MAC CE), or a specific signal/channel, or a combination of these, or may determine these, based on UE capability.

The prediction accuracy information may be included in the predicted beam report for reporting or may be reported separately from the predicted beam report. The prediction accuracy information may be reported by using a MAC CE for transmission of prediction accuracy information, for example.

The UE may determine, for future prediction accuracy information, a time point for prediction based on which accuracy is to be computed, based on the above-described time offset. This time offset may be configured by RRC or may correspond to the time offset included in the predicted beam report.

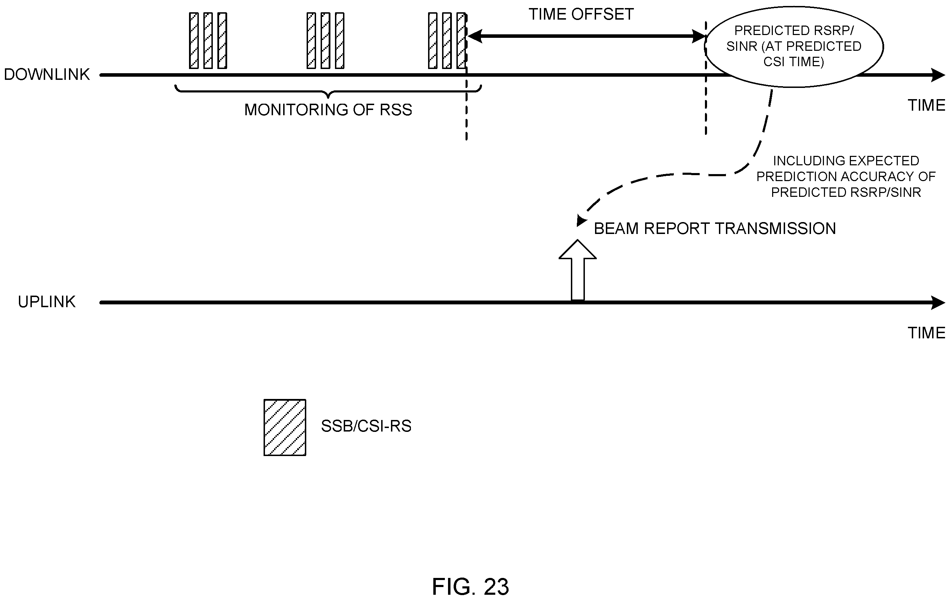

FIG. 23 is a diagram to show an example of computation of future prediction accuracy information according to the seventh embodiment. In this example, the UE may derive expected prediction accuracy for a predicted RSRP/SINR at a predicted CSI time corresponding to the time offset after the end of the last symbol of monitored RSs and report the expected prediction accuracy by using a beam report.

According to the seventh embodiment described above, the UE can appropriately report a predicted beam report.

### <Eighth Embodiment>

An eighth embodiment relates to a valid beam report when a beam report in a PUSCH is triggered based on a CSI request field of DCI.

In the eighth embodiment, the UE may carry out at least one of provision of a valid CSI report (beam report) and update of CSI when the following conditions are satisfied:
- the first uplink symbol for transmitting a corresponding CSI report including an influence of timing advance starts from or later than a symbol Z_{ref}, where the symbol Z_{ref} is defined as an uplink symbol later than a threshold Z from the last symbol of the PDCCH triggering the beam reporting, and
- the first uplink symbol for transmitting the n-th corresponding CSI report including an influence of timing advance starts from or later than a symbol Z'_{ref}, where the symbol Z'_{ref} is defined as an uplink symbol later than a threshold Z' from the last symbol of the newest aperiodic CSI-RS resource.

The UE may determine at least one of the above-described thresholds Z and Z', based on a value from CSI computation delay requirement tables (3GPP TS 38.214 Tables 5.4-1, 5.4-2) in existing Rel-15/16 NR.

The UE may determine at least one of the above-described thresholds Z and Z', based on a value obtained by adding/multiplying a specific value (offset value) to/by a value from the CSI computation delay requirement tables in existing Rel-15/16 NR. This specific value may correspond to an additional calculation time for prediction.

When the UE has prediction capability, the UE may report information related to the above-described additional calculation time as UE capability information. This capability related to the additional calculation time may be selected from some calculation time candidates, for reporting. When no capability related to additional calculation time is reported, the UE may assume a default calculation time.

The UE may judge that at least one of the above-described thresholds Z and Z' is a new value for beam reporting. The new value may be determined based on a specific rule, may be determined by using physical layer signaling (for example, DCI), higher layer signaling (for example, RRC signaling, a MAC CE), or a specific signal/channel, or a combination of these, or may be determined based on UE capability.

According to the eighth embodiment described above, for example, the UE can appropriately judge whether to provide a valid beam report.

### <Others>

The above-described embodiments may be used in combination. For example, the predicted beam report in the seventh embodiment may correspond to the conditional beam report in the second/third embodiment. In this case, the terms in the second/third embodiment may be interpreted as terms taking account of prediction as appropriate. For example, the radio link quality in the second/third embodiment may be interpreted as a predicted radio link quality, the CSI related quantity in the second/third embodiment may be interpreted as a predicted CSI related quantity, and the RS in the second/third embodiment may be interpreted as an RS for prediction. Such interpretation of terms for a combination of the embodiments may be appropriately understood by those skilled in the art for interpretation.

In the above-described embodiments, an L1-RSRP is interpreted as an existing CSI related quantity and vice versa. However, an L1-RSRP may be interpreted as a new CSI related quantity and vice versa. For example, a different granularity may be determined for each new CSI related quantity, based on the fifth embodiment.

The RRC parameters (RRC configurations) in the above-described embodiments may be included in a CSI report configuration (CSI-ReportConfig information element), for example.

Beam measurement in the above-described embodiments may be interpreted as Radio Resource Management (RRM) measurement. A beam report may be interpreted as a measurement report.

In the present disclosure, the description has been given by assuming that a predicted value is one value, but this is not restrictive. For example, a predicted value may be computed as a probability density function (PDF) / cumulative distribution function (CDF), and information necessary for indicating the PDF/CDF may be reported as predicted CSI information.

At least one of the above-described embodiments may be applied only to a UE that has reported a specific UE capability or that supports the specific UE capability.

The specific UE capability may indicate at least one of the following:
- whether to support specific operation/information of each embodiment,
- maximum number of monitoring RSs for L1-RSRP/SINR calculation,
- maximum number of L1-RSRP/SINR reports in a CSI report,
- step size of L1-RSRP/SINR available in a CSI report,
- range (maximum/minimum value) of an L1-RSRP/SINR value available in a CSI report,
- maximum time offset between a predicted value for a CSI time and a measured RS or a CSI report,
- maximum number of time instants in one CSI report of a predicted CSI report,
- processing time required for computation/reporting of a predicted value, and
- processing time for calculating a CSI related quantity after a measured RS (for each CSI related quantity).

The UE capability may be reported for each frequency, may be reported for each frequency range (for example, Frequency Range 1 (FR1), Frequency Range 2 (FR2), FR2-1, FR2-2), may be reported for each cell, or may be reported for each subcarrier spacing (SCS).

The UE capability may be reported commonly or may be reported independently for time division duplex (TDD) and frequency division duplex (FDD).

The UE capability may be reported for each type of CSI report. The type of CSI report here may be at least one of a CSI report using a MAC CE, a CSI report using UCI, periodic/semi-persistent/aperiodic CSI report, and the like.

At least one of the above-described embodiments may be applied to a case where the UE is configured with specific information associated with the above-described embodiments by higher layer signaling. For example, the specific information may be information indicating enabling of a predicted beam report, any RRC parameter for a specific release (for example, Rel. 18), or the like.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

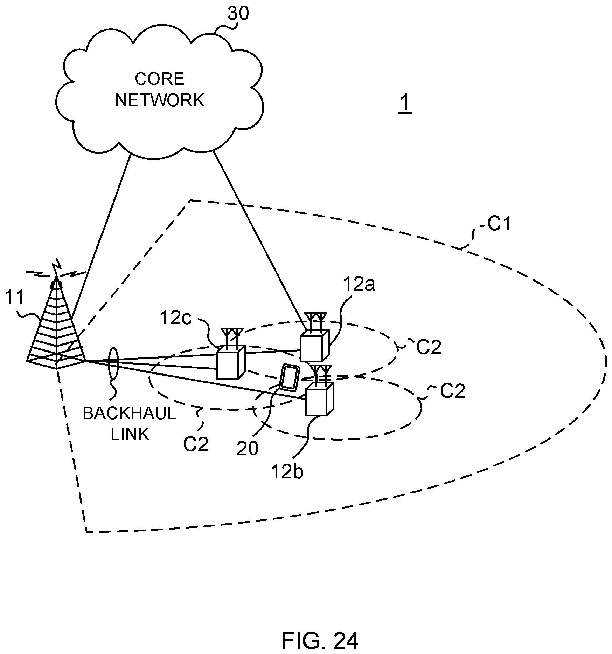

FIG. 24 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multicarrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

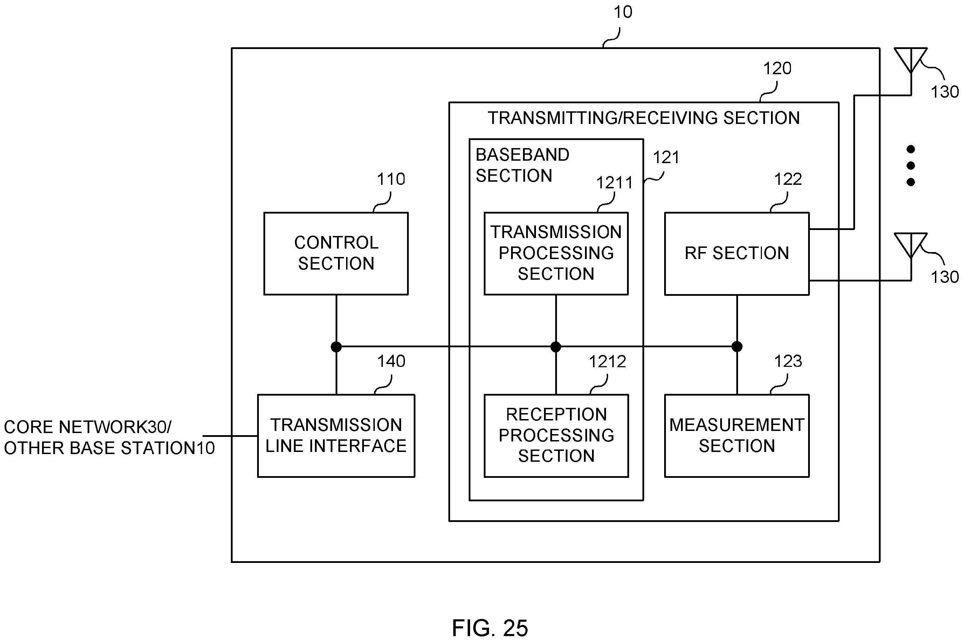

FIG. 25 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may transmit, to the user terminal 20, configuration information (for example, a CSI report configuration) for reporting phase information of a measured reference signal.

The transmitting/receiving section 120 may receive the channel state information (CSI) report from the user terminal 20.

The transmitting/receiving section 120 may transmit, to the user terminal 20, configuration information (for example, a CSI report configuration) for control of transmission based on a radio link quality(ies) corresponding to one or more reference signals for a channel state information (CSI) report.

The transmitting/receiving section 120 may transmit, to the user terminal 20, configuration information (for example, a CSI report configuration) for performing control to include information related to the radio link quality corresponding to which one of the one or more reference signals in a channel state information (CSI) report based on the radio link quality(ies) corresponding to the one or more reference signals.

The transmitting/receiving section 120 may transmit, to the user terminal 20, configuration information (for example, a CSI report configuration) for causing the user terminal 20 to perform control of including information related to a predicted radio link quality(ies) at a future time computed based on a radio link quality(ies) of one or more reference signals, in a channel state information (CSI) report.

The transmitting/receiving section 120 may receive the CSI report from the user terminal 20.

### (User Terminal)

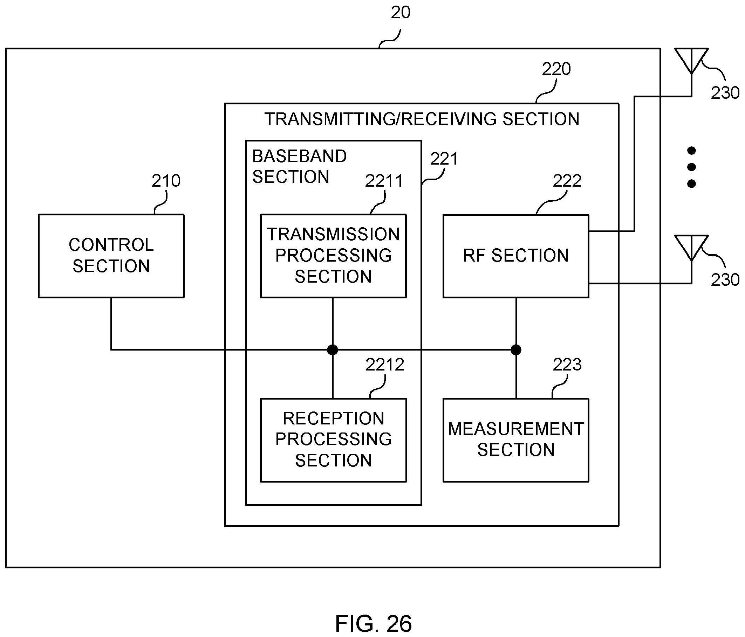

FIG. 26 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220, the transmitting/receiving antennas 230, and the communication path interface 240.

Note that the control section 210 may perform control to include phase information of a measured reference signal in a channel state information (CSI) report. The transmitting/receiving section 220 may transmit the CSI report.

The control section 210 may perform control to include information of a measurement time of the reference signal in the CSI report.

The control section 210 may perform control to include spatial information of the reference signal in the CSI report.

The control section 210 may perform control to include location information of the user terminal 20 (terminal itself) in the CSI report.

The transmitting/receiving section 220 may compute a radio link quality(ies) corresponding to one or more reference signals. The control section 210 may control transmission of a channel state information (CSI) report, based on the radio link quality(ies).

The control section 210 may control the transmission of the CSI report, based on a difference between the radio link quality(ies) thus computed and a previously reported radio link quality(ies).

When an index of a reference signal enabling the highest radio link quality of a specific number of (X) radio link qualities has changed from the index when reporting the CSI report previously, the control section 210 may transmit the CSI report.

The control section 210 may perform control to transmit the CSI report by using a Medium Access Control (MAC) control element.

The control section 210 may perform control, based on the radio link quality(ies), to include information related to the radio link quality corresponding to which one of the one or more reference signals, in a channel state information (CSI) report.

The control section 210 may perform control to include the information corresponding to one of the one or more reference signals that enables a highest radio link quality, in the CSI report.

The control section 210 may perform control to include the information corresponding to one of the one or more reference signals that enables a radio link quality having a largest difference from a previous reported radio link quality, in the CSI report.

The control section 210 may perform control to include the information corresponding to one of the one or more reference signals that has an oldest report of a newest radio link quality, in the CSI report.

The control section 210 may perform control to include information related to a predicted radio link quality(ies) at a future time computed based on the radio link quality(ies), in a channel state information (CSI) report.

The control section 210 may perform control to include information related to one or a plurality of the future times, in the CSI report.

The control section 210 may perform control to include the information related to the radio link quality(ies), in the CSI report.

The control section 210 may perform control to include information related to a prediction accuracy(ies) of the predicted radio link quality(ies), in the CSI report.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatus (for example, via wire, wireless, or the like) and using these plurality of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

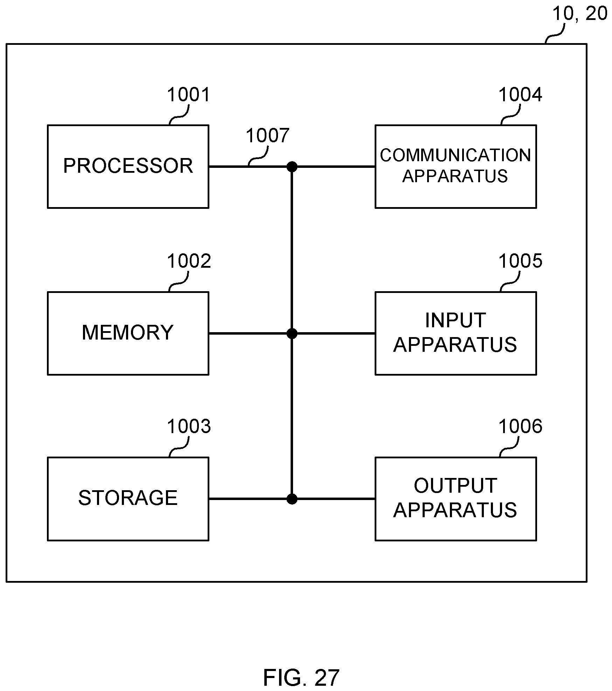

For example, a base station, a user terminal, and so on according to one embodiment of the present disclosure may function as a computer that executes the processes of the radio communication method of the present disclosure. FIG. 27 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs) .

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that computes one or more radio link qualities corresponding to one or more reference signals; and
a control section that controls transmission of a channel state information (CSI) report, based on the one or more radio link qualities.

2. The terminal according to claim 1, wherein
the control section controls the transmission of the CSI report, based on a difference between the one or more radio link qualities thus computed and one or more previously reported radio link qualities.

3. The terminal according to claim 1 or 2, wherein
when an index of a reference signal enabling the highest radio link quality of a specific number of radio link qualities has changed from the index when reporting the CSI report previously, the control section transmits the CSI report.

4. The terminal according to any one of claims 1 to 3, wherein
the control section performs control to transmit the CSI report by using a Medium Access Control (MAC) control element.

5. A radio communication method for a terminal, the radio communication method comprising:
computing one or more radio link qualities corresponding to one or more reference signals; and
controlling transmission of a channel state information (CSI) report, based on the one or more radio link qualities.

6. A base station comprising:
a transmitting section that transmits, to a terminal, configuration information for control of transmission based on one or more radio link qualities corresponding to one or more reference signals for a channel state information (CSI) report; and
a receiving section that receives the CSI report from the terminal.
